# EUROPEAN PATENT APPLICATION

(11) **EP 3 705 005 A1**
(43) Date of publication of application: **09.09.2020**
(21) Application number: 20160276.0
(22) Date of filing: 19.01.2017
(51) Int. Cl.: A47J 43/04, A47J 43/07, A47J 43/06, A47J 44/02

(54) **FOOD PROCESSING HUB**

(30) Priority: 19.01.2016 GB 201601006
(62) Divisional of application: 17701914.8
(71) Applicant: Kenwood Limited, Havant, Hampshire PO9 2NH (GB)
(72) Inventor: PALMER, Paul, Havant, Hampshire PO9 2NH (GB); FIELDS, Robert, Havant, Hampshire PO9 2NH (GB); SHANMUGAM, Sivaprakash, Havant, Hampshire PO9 2NH (GB); SEALY, James Joseph, Havant, Hampshire PO9 2NH (GB); GRUNDY, Gilman, Havant, Hampshire PO9 2NH (GB)
(74) Representative: Hector, Annabel Mary

(57) **Abstract**

A food processing hub (10) comprising an attachment connector (15) for connecting to a food processing attachment (20); wherein the hub (10) is adapted to supply a fluid to the attachment (20) via the attachment connector (15).

## Description

This invention relates to a modular, multi-function kitchen apparatus or food processing device - termed a "universal (kitchen or domestic) hub" - and a method for processing food, including cooking food. In particular, the invention relates to the hub concept, the use and recycling of air and water, as well as various other aspects of hub functionality, including ways in which the hub integrates into kitchen workflow and interoperates with other devices whether in the immediate domestic environment or further afield. The invention also relates to various accessories adapted to be used with the hub.

Kitchen appliances or food processors with removable attachments and tools - including those in which cooking can take place, such as the *Kenwood Cooking Chef ™* - have long been on the market. These attachments typically include one or more driven tools, for example a whisking attachment may include two or more rotary whisks.

Recently there has been a move towards kitchen appliances with internet connectivity controllable via mobile devices, such as the *Philips HomeCooker Next ™.*

However, these cooking food processors lack a simple, built-in means for continual cooling of an attachment, instead typically relying on attachments that are removed and placed in a refrigerator to be cooled prior to use. They also require separate attachments for cooking and cooling.

Moreover there is a need for a food processor capable of integrating intelligently with multiple attachments, cloud-based services, wireless-communicating household appliances, smart meters, and household robots, to efficiently and safely complete a recipe made to conform to user preferences and characteristics.

The present invention aims to address at least some of these issues.

According to an aspect of the invention, there is provided a food processing hub comprising: an attachment connector for connecting to a food processing attachment; wherein the hub is adapted to supply a fluid, preferably a non-flammable and/or compressed fluid, and more preferably a gas (whether flammable or not), via the attachment connector.

Other aspects of the invention include (singly or in any appropriate combination):
- The core idea of using compressed air for multiple functions as part of a (multi-functional) kitchen apparatus, and (also separately) for:
   ∘ assisting heating/cooling
   ∘ driving high-speed tools
   ∘ aeration functions
- Fluid recycling and filtering
- Modular (positionable) heating plates
- Food sensors, for example for cooking/preparation/nutrition, and use of information derived from the sensors
- Network integration and features

Aspects of the invention may comprise one, some or all of the following, in any appropriate combination:
- 'hub' apparatus
- attachment apparatus
- hub-attachment connector arrangement
- specific attachments, including:
   ∘ a hollow-walled bowl with fluid input/output and temperature control of the bowl via an air jacket
   o a whisk/beater/gun having a fluid output in order to improve aeration
- sensor apparatus and methods of using the sensors
- methods of preparing food using the hub/attachment apparatus, such as using a hot/cold air gun to drive components or cool/cook food
- apparatus for, and method of, fluid recycling and filtering
- network features of the hub/attachment, which in turn could further include the interaction with:
   ∘ smart meters
   ∘ peripheral food preparation devices (e.g. a robot)
- user, preferences and/or recipe feedback.

The hub may comprise an appliance such as a food processor, which may have a rotary tool such as a motor driven tool. The appliance may include a container or bowl, such as a detachable bowl, having a conduit for the fluid, which may be used to heat or cool the contents of the bowl. The appliance may include a separate heater, such as a resistive or inductive heater.

Further features of the invention are characterised by the dependent claims.

As used herein, the term "attachment" generally preferably refers to an assembly that is attached, preferably removably, to the hub and the term "tool" preferably refers to a (typically mechanical) driven/heated/cooled component of the attachment. An attachment may comprise one or more tools.
As used herein, the term "fluid" preferably refers to a liquid and/or gas.

The invention also provides a computer program and a computer program product for carrying out any of the methods described herein, and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

The invention extends to methods and/or apparatus substantially as herein described with reference to the accompanying drawings.

Any feature in one aspect of the invention may be applied to other aspects of the invention, in any appropriate combination. In particular, method aspects may be applied apparatus aspects, and vice versa.

Equally, the invention may comprise any feature as described, whether singly or in any appropriate combination.

Furthermore, features implemented in hardware may generally be implemented in software, and vice versa. Any reference to software and hardware features herein should be construed accordingly.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances, and any reference to "food" herein may be replaced by such working mediums. It will be appreciated that the processing of food may include the processing and/or blending of liquid, and may also include the processing of solid food or ice into a liquid form.

The invention described here may be used in any kitchen appliance and/or as a stand-alone device. This includes any domestic food-processing and/or preparation machine, including both top-driven machines (*e.g*. stand-mixers) and bottom-driven machines (e.g. blenders). It may be implemented in heated and/or cooled machines. It may be used in a machine that is built-in to a work-top or work surface, or in a stand-alone device. The invention can also be provided as a stand-alone device, whether motor-driven or manually powered. References to processing food should be taken to include any operation including heating or cooling of food. References to cooling may be taken to refer to either cooling or heating.

The invention will now be described, purely by way of example, with reference to the accompanying drawings, in which:
Figure 1 is a conceptual diagram of a universal kitchen hub;
Figure 2 shows an overview of component modules of the hub and a typical attachment;
Figures 3, 4 and 5 show the flow control arrangement in the hub and a typical attachment;
Figure 6 shows the recycling of air and water used in the hub and attachment;
Figure 7 shows detail of the hub-attachment connector;
Figure 8a shows an example of a hollow-walled bowl attachment for use with the hub;
Figure 8b shows a schematic side view of a kitchen hub comprising a stand mixer and a bowl;
Figure 8c is a perspective view of an evaporator for use with the cooling system of the stand mixer;
Figure 8d is a perspective view of a condenser for use with the cooling system;
Figure 8e shows an outer bowl with connectors for the cooling system;
Figure 8f shows an inner bowl for use with the outer bowl of Figure 8e;
Figure 8g shows the assembled bowl;
Figure 8h is a cut away view of the outer bowl;
Figure 8i is a cross sectional view of the assembled bowl;
Figure 8j is a diagram of a compressor for use with the stand mixer appliance;
Figure 8k is a diagram of a cooling system for the bowl;
Figure 8l is a diagram of a further cooling system;
Figure 8m is a diagram of a refrigeration system;
Figure 8n is a perspective view of a stand mixer appliance with a bowl;
Figure 8o is a side view of the appliance;
Figure 8p is a top view of the appliance;
Figure 8q is a perspective view, partly broken away, of the appliance;
Figure 8r is a side view of the appliance;
Figure 8s is a further side view of the appliance;
Figure 8t is a diagram of the connections to the bowl;
Figure 8u is a side view of an evaporator housing;Figures 9 and 10 show the hub as part of a communications network and in data communication with various external devices;
Figures 11 and 12 show further features of embodiments of the hub and attachments; and
Figure 13 is an example of a tool arranged to be used with the hub.

### Overview

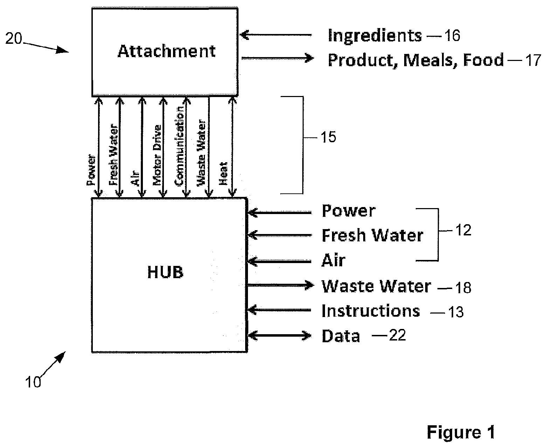

Figure 1 is a conceptual diagram of a universal kitchen hub, comprising a hub or base unit 10 interfacing with a generic attachment 20.

Generally, hub 10 is a unit to which attachments 20 can be attached or connected to in order to prepare and create food and drinks - whether simple snacks, drinks such as tea, coffee etc. or more complex entire meals - completing cooking functions (boiling, draining, adding water) automatically, with minimal user intervention.

Hub 10 may be a built-in appliance (eg. as part of a kitchen island, or built-in hob or refrigerator) or a stand-alone work-top appliance similar to a food processor or other kitchen machine. It may also co-operate with appliances in the vicinity to successfully complete a cooking task.

Hub 10 is designed to be modular, accepting connections from a variety of attachments or tools and providing them with power, services and materials in order to accomplish various cooking and other domestic tasks. It is envisaged to replace much of the clutter found in the typical modern kitchen, resulting in an "empty kitchen" concept, the hub providing a complete cooking solution.

Generally, hub 10 receives inputs 12 such as power, air and water and in accordance with (optionally received) instructions 13 acts on them - or provides them or their by-products (eg. heat, motor drive) - as inputs or services via an interface 15 to an attachment 20.

Hub 10 is directly supplied with mains water and/or includes a water storage/reservoir filled by the user. The hub can supply water to the attachment for use in cooking and preparation processes.

Attachment 20 makes use of the inputs and services provided by the hub 10 to process (optionally received) ingredients 16 into food products 17.

Optionally, hub 10 also receives waste products from the attachment 20 and disposes of them.

Generally, hub 10 and attachment 20 are in communication to exchange data and the hub itself participates in a wider network exchanging data 22 with external devices.

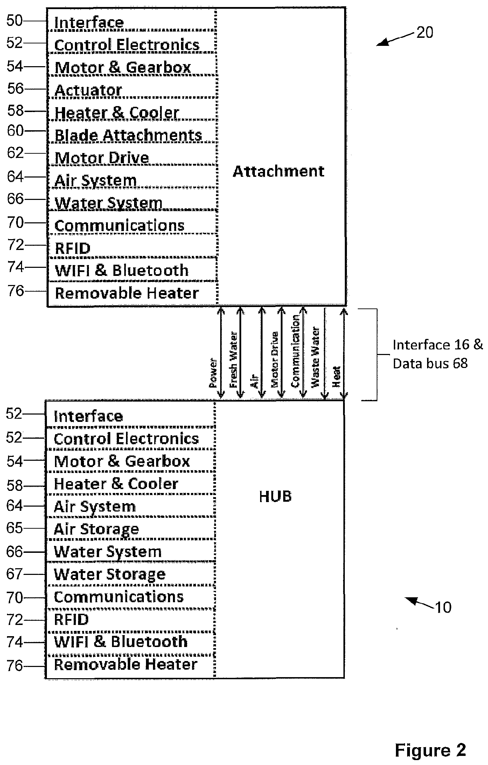

Figure 2 shows an overview of component modules of the hub and a typical attachment, including:
- Interface module 50
- Control electronics module or control unit 52, comprising processing circuitry to enable the user to control the hub and its attachments. Attachments 20 may themselves contain intelligent control electronics or processing circuitry capable of bi-directional communication with the processing / control circuit in the hub.
- Motor & Gearbox module 54
- Actuator module 56
- Heater & Cooler module 58
- Blade attachments module 60
- Motor drive module 62
- Air systems module 64 / Air storage module 65
- Water system module 66 / Water storage module 67
- Interface 15, providing the attachment 20 with power, air, water etc, further comprising a data bus 68 which facilitates bi-directional communication between the hub 10 and the attachment 20. The data bus 68 may be hard-wired or alternatively (or in addition) other communication means may be used such as an infra-red link, magnetic / inductive transfer, modulation of the power line, RF, Wi-Fi, Bluetooth, Li-Fi, laser, ultrasound, surface acoustic waves or similar.
- Communications module 70 to allow for hub-attachment communication.
- RFID module 72
- WiFi & Bluetooth module 74
- Removable heater element 76

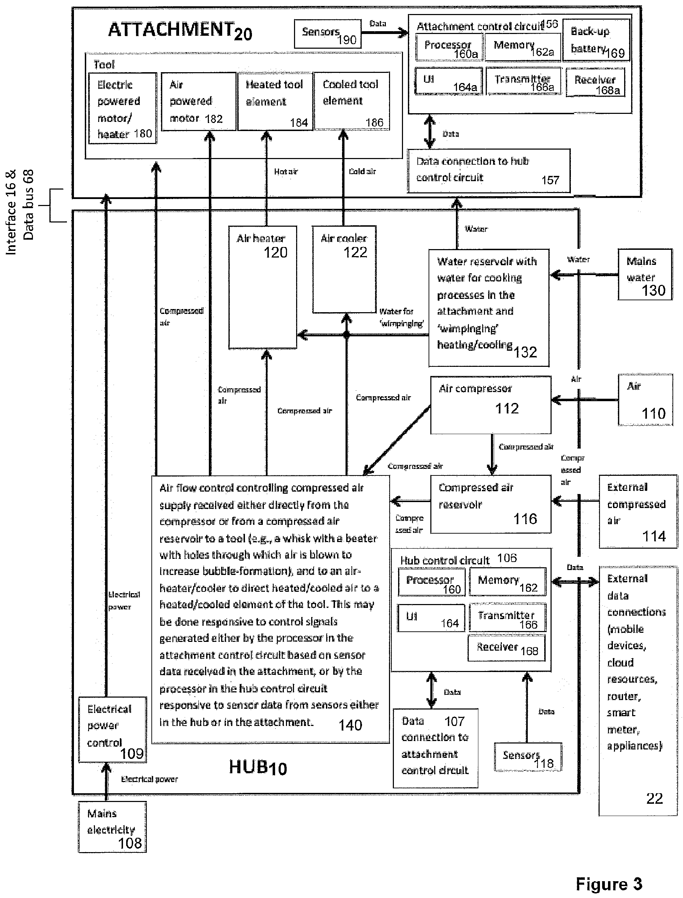

Figures 3, 4 and 5 show the flow control arrangement in the hub and a typical attachment.

As previously, hub 10 receives inputs 12 such as power (via mains electricity 108, modulated via electrical power control 109), air 110, 114 and water (from mains water 130). Combustible fuel, such as natural gas, may also be received by the hub 10, and supplied to the attachment 20.

Overall control of the hub is by means of the hub control circuit 106, comprising suitable processor 160, memory 162, user interface 164, transmitter 166, receiver 168 and optional back-up power.

A corresponding attachment control circuit 156 (with corresponding constituent components, optionally including a back-up battery 169) may also be provided.

The control circuits 106, 156 communicate via respective data connections 107, 157.

### - use of compressed air

Generally, hub 10 operates on compressed air. The hot/cold air supplied by the hub 10 can be used by the attachment 20 for a variety of purposes including: for heating / cooling the attachment, for heating / cooling and/or providing aeration to ingredients being worked on by the attachment, for driving moving parts within the attachment. The term "compressed air" as used here preferably includes circulation fan-driven air, as well as air compressed by pumps and other compression means. For example, in some embodiments, circulation fans cycle air over refrigerated/heated elements, such that heated/cooled air supplied to the attachment can be run over refrigerators/heaters inside the hub and then directed into the attachment.

Where air 110 is input directly from the atmosphere it is compressed by an integral air compressor 112.

Alternatively, or in addition, an external source of compressed air 114 may be used.

In some embodiments hub 10 includes a compressed air reservoir 116. The filling of this reservoir 116 - either from an external compressed air supply 114 or from the internal compressor 112 - is controlled by the hub control circuit 106 in dependence on pressure data received from sensors 118 within the hub, which for example may indicate that the pressure in the compressed air reservoir 116 has dropped below a given pressure. The use of dedicated pressure monitoring sensor may obviate the need for a pressure valve.

Air heater 120 and air cooler 122 supply hot and cold air via an outlet that connects to an inlet on the attachment 20.

Heating of air output by the hub 10 may be by any known method, for example, resistive heating, hot output of a vortex cooler, Peltier heating, gas, chemical reaction, radiative heating, or compression heating. Simply, a hot air gun may be built into the hub unit.

Cooling of air can be by any known method, for example, refrigeration, compressor circuit, Vortex cooler, Peltier cooler, gas, evaporation, chemical reaction, expansion cooling.

The output of heating and cooling modules 120, 122 is controlled by a control circuit 106 within the hub 10 or a control circuit 156 within the attachment 20, based on feedback from integral temperature sensors of the heating and cooling modules, and/or from temperature sensors within the attachment.

Air is then directed to where it is needed inside the attached attachment 20 and may be supplied either 'wet' or 'dry'.

In some embodiments the hub 10 also comprises a dehumidifier. Air may be dehumidified either before compression to avoid precipitation of water during compression that may cause rust to the compressor 112 and its associated components, or before cooling to avoid precipitation due to cooling impairing the function of the cooling module 120, or optionally before heating to allow the production of arid air for use in food processing and/or cleaning.

The presence of a water reservoir 132 allows for the use of water for cooking processes in the attachment. For example, wet (i.e., high moisture content) impinging hot air ('wimpinging') can be output for fast heat transfer while maintaining moisture in food.

High-moisture content air can be used to similar effect in cooling processes.

Mixing of water with air may be before or after heating/cooling of the air, and may occur either in the hub or in the attachment.

Other substances may also be mixed with the air and/or water, for example:
- Oil may be mixed with the heated air to facilitate frying where the air is to be injected into the food containing compartment
- Flavourings may be optionally mixed with air and/or water (or a suitable solvent) to add a desired flavour to food exposed to the air
- Anti-freeze is available to be mixed with water (or a lower freezing-point substance used instead of water) and/or air, before cooling to avoid freezing of water and/or fats.

Dried air can be output by the hub in co-operation with the attachment in the form of an impinging jet of hot air for fast browning / crisping of food - a 'browning gun'.

Instead of air, any other suitable working medium may be used. For example, in some processes it may be desirable to use an inert gas such as nitrogen to create a sterile, non-flammable environment inside the attachment. Alternatively, hydraulic fluids such as water and oil may be used for driving moving parts.

Depending on the purpose for which the air is to be used, differing pressures and flow-rates are required from the compressor 112.

In a closed-circuit cooling system where the medium is air and where the ambient conditions are RTP, 180-250 PSI is a desirable pressure to achieve. However, where conditions vary from RTP (eg. in cold or hot climates and at considerable altitudes), in some embodiments the hub or its attachment include suitable sensors for detecting ambient temperature and pressure conditions and adjusting pressurisation to compensate. Where different mediums are used, different pressures and temperatures can also be used.

For conveying heated or cooled air into and/or through the attachment 20 relatively low pressure (such as may be created by a fan) will suffice. By contrast, to drive compressed air-driven tools flow rates of up to 45 liters per minute of air at pressures up to 8 bar are typically required. Similar air-powered tools are used in dentistry, where compressors are rated on the amount of air they deliver (free air delivery - FAD) at a given pressure.

### - gas flow

The use of air provides for flexible cooking, being easy to direct to wherever needed be that into a tool, around or into a bowl etc.

The food contained within attachments 20 can be heated or cooled by direct air heat transfer or by indirect conduction of heat, eg. hot or cold air can be blown around the outside of a bowl attachment, heat the bowl and then in turn be blown into the attachment to heat or cool the food.

Air can be directed into attachments and through the actual tools placed inside the food, eg. cold air can be blown through the inside of a whisk or beater (i.e., through holes in the beater) to increase bubble-formation during whipping of eggs or cream.

Compressed air can also be used to drive motors 180, 182 inside tools/attachments. Compressed-air powered motors 182 have the advantage of being smaller, lighter, more durable, and simpler than electric-powered motors 180 (which may be used also or alternatively).

### - flow control

Generally, air flow control module 140 controls the compressed air supply received either directly from the air compressor 112 or from a compressed air reservoir 116 to a tool (e.g., a whisk with a beater with holes through which air is blown to increase bubble-formation), and to an air heater 120 or air cooler module 122 to direct heated or cooled air to respectively a heated element 184 or a cooled element 186 of the tool. This may be done responsive to control signals generated either by the processor in the attachment control circuit 156 based on sensor data received in the attachment 20, or by the processor in the hub control circuit 106 responsive to sensor data from sensors 118 either in the hub 10 or sensors 190 in the attachment 20.

The hub and its attachment can switch between heating and cooling a tool or tool element 184, 186 within the attachment 20 by control of an air flow control module 140 including flaps/valves for controlling air flow, and controlling the output of heating/cooling devices.

Hub 10 may use an internal control circuit 106 to control an air flow control module 140 to selectively supply compressed air, heated air, or cooled air to tool elements of the attachment requiring heating, cooling, and driving, based on feedback from sensors in the attachment transmitted via a control circuit in the attachment, and according to a programmed recipe-step.

Various arrangements of air heater module 120, air cooler module 122 and air flow control module 140 are possible. For example:
Figure 3 shows an arrangement wherein the attachment control circuit 156 generating the control signals for the air flow control module 140 in the hub based on the sensor data it receives from within the attachment. This arrangement has the advantage of simplifying the attachment by having the air heater module 120, air cooler module 122, and air flow control module 140 in the hub 10.

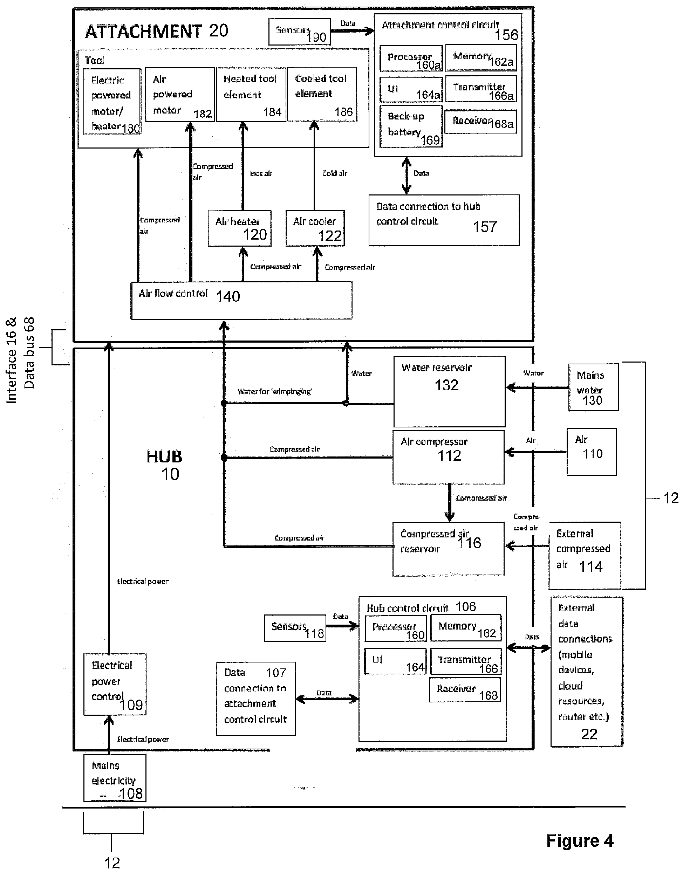

Figure 4 shows instead of data signals from the hub control circuit 106 controlling the air flow control module 140, the attachment control circuit 156 controls the air flow control module 140 directly. This is achieved by placing the air heater module 120 and air cooler module 122 inside the attachment 20. This has the advantage of reducing the amount of data-transfer needed between the attachment 20 and hub 10, as well as minimising the number of connectors needed to carry air between the hub and the attachment.

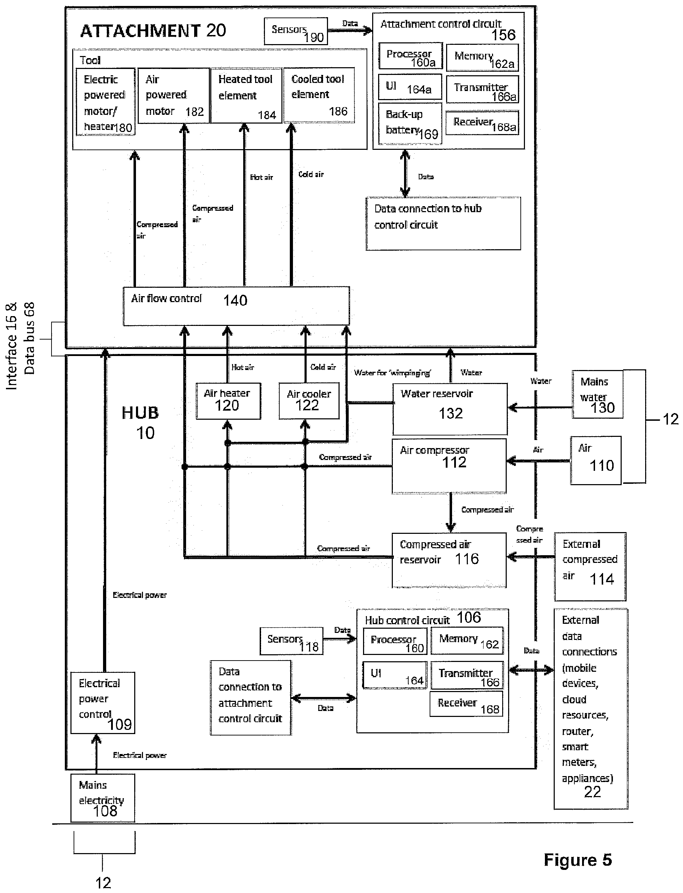

Figure 5 shows the air heater module 120 and air cooler module 122 located in the hub 10, with the air flow control module 140 located in the attachment 20 and controlled directly by the attachment control circuit 156. This has the advantage of simplifying the attachments whilst still allowing rapid control by the attachment control circuit 156 responsive to sensor data received from within the attachment.

### - recycling

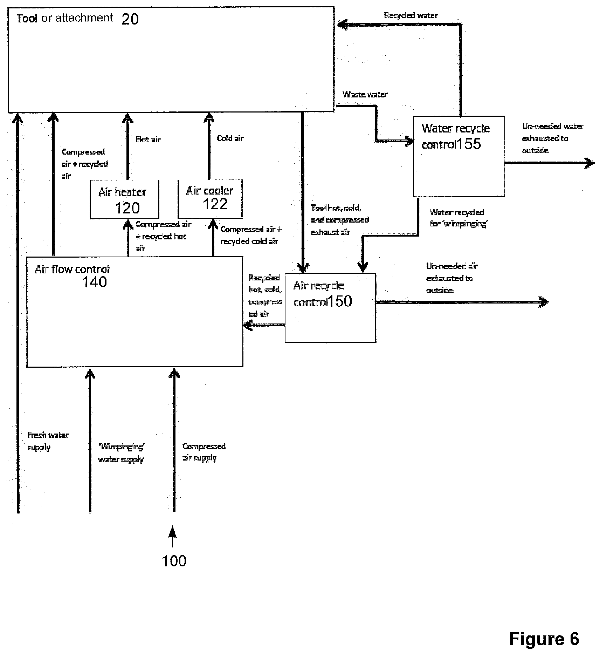

Figure 6 shows the recycling of air and water used in the hub and attachment.

Air used for heating/cooling can be recirculated to optimise efficiency or alternatively used once only to ensure non-contamination of separate foods. This can be controlled by the user or automatic or predetermined program switching control flaps/valves to direct the air either to return the air for re-use or exhaust the air into the outside environment.

Water may be similarly re-cycled. In some embodiments, water may also be recycled within the attachment 20.

The air flow control 140, air recycle control 150, and water recycle control 155 elements may be located either in the attachment 20 or in the hub 10. Locating them in the attachment 20 has the advantage of reducing the number of connections required between the hub 10 and the attachment 20, whilst locating them in the hub 10 has the advantage of simplifying the attachment 20.

The attachment control circuit 156 or hub control circuit 106 controls the air recycle and water recycle modules 150, 155 to recycle or vent/exhaust air and waste water dependent on the next step in a program or recipe. For example, when a cooling step follows a heating step, the attachment control circuit 156 or hub control circuit 106 will control the air recycle module to switch from recycling hot air to venting it externally.

To ensure that excessively hot or cold air / water is not exhausted to the outside which may cause harm, exhaust air / water is directed through a series of baffles or through a heat-exchanger to heat / cool it to a safe temperature.

In some embodiments, other materials may also be recycled, such as oils or fats used for frying.

### - purging, cleaning, sterilising and drying

At a final step, attachment control circuit 156 or hub control circuit 106 can control the air flow control module to purge the tool of hot/cold air by flushing it with compressed air at room temperature, thus rendering it safe to handle.

At the end of a cooking process, either the attachment control circuit 156 or hub control circuit 106 drives the air heater 120, air cooler 122, water supply and attachment tools to carry out a step of cleaning and heat sterilisation of the attachment 20. This cleaning step may involve emitting steam into a food receptacle of the attachment, spraying it with pressurised water, and/or heating the food receptacle and associated tools so as to sterilise them.

Waste water produced by cleaning may then be directed out of the attachment into the household drains.

Dry air may also be directed to an interior of the food receptacle to dry it after cleaning.

### Hub-attachment connector

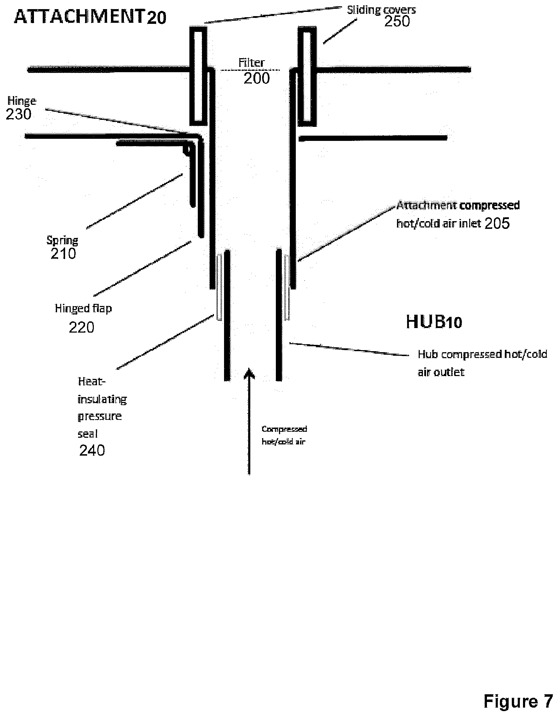

Figure 7 shows detail of the hub-attachment connector for fluid connection between the hub and attachment. In more detail, the attachment comprises a as male connector, and the hub is comprises a female connector.

Generally, attachments 20 are removably connected to the hub 10 and the air channel and interface between hub 10 and the attachments 20 is designed so as not to allow hot air to burn the user when disengaging the attachments.

Air (and water) supplied to the hub are preferably supplied through a filter to ensure that operation is not impaired through ingress of particles, ie. objects are prevented from entering the heating unit or attachment. This filter may be integral to the hub or a separate appliance.

One way to achieve this is by means of filter 200 or safety flaps which operate in a similar way to the UK mains plug, using a pin to open the flaps as the attachment is fitted. This also stops any hot air being able to come out of the unit and burning the user when an attachment is not fitted. In some embodiments this is achieved electronically with the use of RFID or other sensor systems.

In some embodiments, the user attaches the attachment 20 to the hub 10 by inserting the attachment inlet 205 through a hole covered by a spring (210)-loaded hinged flap 220, pushing the hinged flap to rotate about its hinge 230 into the hub 10 until the hinged flap reaches an open position. The attachment inlet 205 then mates with the hub outlet around its outside (to prevent direct contact of the end portion of the attachment inlet 205 with heated/cooled gas), with a seal 240 located either on the outside of the hub outlet, or the inside of the attachment inlet 205, or both, ensuring an air-tight seal between the two. This seal is preferably made of a low-heat-conductivity and heat-insulating material such as ceramics or polymers to prevent the bottommost end of the attachment outlet becoming dangerously hot or cold.

For added protection, a sliding cover 250 can be formed around the attachment inlet that is pushed to recess into the attachment 20 when the attachment is attached to the hub 10. This sliding cover 250 may be spring-loaded so that it automatically slides down to cover the attachment inlet when the attachment is removed from the hub to cover it and protect the user against contact with it.

Filter 200 may be located in the attachment inlet 205, at the top of the attachment inlet where the attachment inlet enters the attachment 20, to prevent the ingress of particles into the attachment that might impair the performance.

Alternatively, filter 200 may be located at the distal (ie. bottom) end of the attachment inlet 205. In the latter case filter 200 may be arranged so as to slide into the attachment inlet 205 when the hub outlet is pushed into the attachment inlet, and spring-loaded so as to return to its original position when the attachment 20 is detached from the hub 10.

Clips formed on the lower surface of the attachment 20 engage with recesses in the hub 10 (or vice-versa) to ensure a firm connection between the two. These clips actuate push-rods in the recesses, which in turn actuate interlocks allowing the hub 10 to function, thus ensuring that the hub will not function unless a firm connection has been established.

Both the hub control circuit 106 and the attachment control circuit 156 use additional data from RFID and/or NFC sensors to confirm that the two components are properly connected to each other. Once the hub control circuit 106 detects that the attachment 20 is attached, it can conduct a pressure-test to confirm that an air-tight connection has been formed.

Other ways of achieving a safe connection may also be used.

For example, the attachment inlet 205 may be automatically recessed into the attachment 20 using motors powered by a back-up battery 169 of the attachment control circuit 156 when it detects that the attachment 20 has been detached from the hub 10.

The back-up battery 169 of the attachment control circuit 156 may also drive motorised tools inside the attachment to return to a safe position, and maintain the attachment lid in a locked position until sensor data shows that it is safe to open the attachment.

The hub-attachment connector may alternatively be a 360-degree connector allowing the attachment 20 to be attached to the hub 10 at any angle so long as the contacting surfaces of attachment 20 and the hub 10 are flush to each other.

Annular electrical contacts may be positioned around the hole in the hub 10 and covered by the spring-loaded flap 220 which pins in the attachment contact so that supply electrical power may be supplied to the attachment 20 and data exchanged between the attachment 20 and the hub 10.

### Attachments

Generally, attachments 20 are designed to comply with a modular tool connection standard, such as those defining power and data connections, allowing a user to build an ecosystem of relatively cheap) attachments for use with a (relatively expensive) hub. Compatible attachments may be manufactured by other parties under licence. Typically, the tools and attachments are lightweight, optionally heated and/or providing air injection into (ie. aeration of) the food being processed.

### - power

Attachments 20 may include internal motors that derive power from the hub 10. These motors are typically electrical or compressed-air powered motors.

Hub 10 may include a motor with an output that can be connected to the attachment to drive chopping / slicing discs, vibrating knives, stirring blades and paddles etc. Linear motion, optionally flexibly directed, and/or high-speed rotary ('Dremel') operation may be used. The tools may be high power.

The attachments 20 can include multiple pneumatic / fluid logic gates to control the switching of air from one part of the attachment to another. The attachment can also have its own heating system associated with it, and derive electrical power from the hub via an electrical connection.

In some embodiments, attachments and tools are hydraulic or water powered. Other embodiments use switched-reluctance (SR) motors for high torque, low speed, reversible operation.

### - positioning

The attachment may be articulated to swing away / lift away from the food processing / cooking area. The trajectory of the attachment could depend on where the hub is situated, for example sideways if the hub is under a cupboard or upwards if in a corner.

This allows for the use of hand-operated tools, whether using the air directly, such as an air-guns and similar tools to those used in dentistry, or various mechanical tools, such as high-speed whisks.

### - temperature control and processing

Using valves and an associated air flow control system, separate parts of a bowl or attachments can be heated and cooled concurrently to achieve graduated temperature control inside food being cooked and/or processed.

Using cold air directed into a food-receptacle of the attachment, food can be left inside of the bowl/attachment in a refrigerated state for a prolonged period before cooking/processing.

Cooking can be performed at pre-set times of day, and/or can be instructed remotely via connected apps or other communications means such that a user may "Come home and find dinner cooked", with the food refrigerated until it was eaten.

Cooling of food before or during processing can increase the processing quality eg. cutting cheese and soft fruit/vegetables. Food to be processed in an attachment, and processing elements for processing the food such as blades, can therefore be pre-cooled using cold air directed to a food receptacle within the attachment or to the food processing elements.

### - leak monitoring and detection

All air channels are designed to minimise air leakage and noise throughout. The hub control circuit 106 may periodically pressure-test internal air-lines of the hub 10 and its attachment 20 by directing the air flow control module 140 and air compressor 112 to pressurise internal lines and then using internal pressure sensors 118 of the hub to detect whether there is any pressure-drop inside the airlines caused by leaks. Diagnostic data from this pressure test may then be output to one or more of the hub user interface 164, the mobile device app, and an external server.

### - examples of attachments

Attachments 20 to the hub 10 can include food receptacles such as a removable bowl or multiple removable or interchangeable bowls.

Examples of attachments that can be attached to the hub and use the hot/cold air outlet include:
- Blender - uses cold air to cool contents to ensure maximum nutritional content of blended food or to chill the contents before/during/after blending to a refreshing cold temperature. Hot air-heated elements may be used to make hot soups, and pre-cook food before blending. The blender blades can be driven by a compressed-air-powered motor.
- Juicer - uses cold air to cool contents to ensure maximum nutritional content of juiced fruit or to chill the contents before/during/after blending to a refreshing cold temperature. Temperature control can be used to pasteurize juice.
- Toaster - a toaster attachment that uses impinging jets of hot air or hot-air-heated elements to toast bread. Additional radiant heating elements may also be provided within the attachment, with their effect enhanced by air-flow over the bread removing moisture and quickening toasting.
- Kettle - hot air can be directed through water or a heated element immersed in the water to warm and boil as needed in a kettle type attachment.
- Meat Grinder - cooling the processing of meat through a meat grinder ensures all the meat is not heated therefore minimising the risk of food poisoning.
- Coffee maker or other beverage maker - heating the beverage using a combination of electrically or inductively-heated element, or hot-air-heated elements to prepare it, and then cooling it using cold air for consumption.
- Attachments for creating air "popped" snacks - e.g. air levitated/fried crisps and popcorn.
- A hand-held hot air/cold air gun - used by a user to brown meat/caramelise sugar, or to locally cool/freeze food.

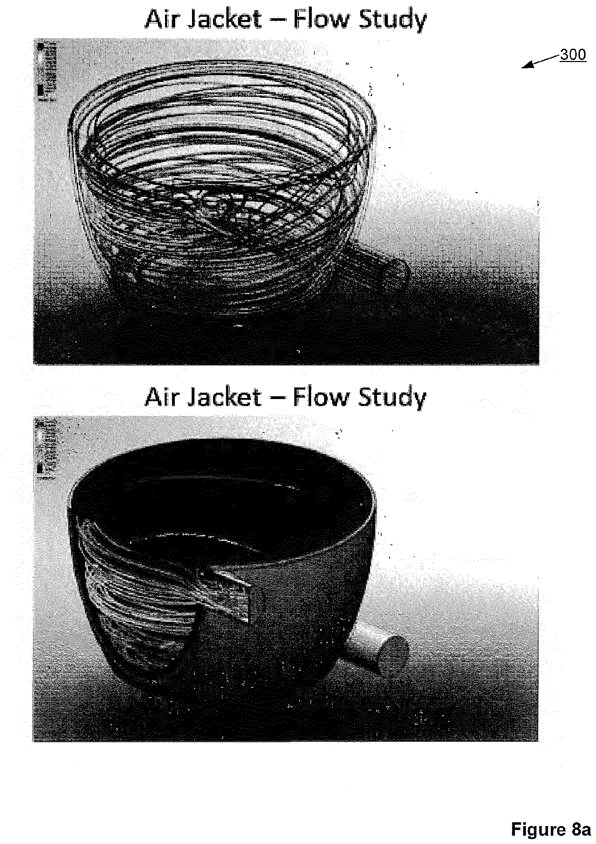

Figure 8a shows an example of a hollow-walled bowl attachment for use with the hub.

Hollow wall bowl 300 allows temperature controlled air to circulate to indirectly heat food placed in the bowl. To optimise the heat transfer from the air to the bowl the air is made to travel through the hollow wall in a series of spirals, maximising the time and rate of heat transfer. Intentional turbulence is also be used to help heat-transfer. This provides for even heating. Furthermore, no elements need to be inserted into the bowl - which would otherwise require later washing.

### - pressure control

The food-receptacles within attachments 20 may be air-tight, and the hub or attachment control circuits 106, 156 may regulate the pressure inside an attachment responsive either to a programmed recipe step, user input, or sensor data from within the attachment. This may be performed by controlling the air flow control module to direct compressed air to food receptacle of the attachment to pressurise it. Alternatively, the air flow control module can be controlled to direct compressed air to an evacuation pump connected to a food receptacle within the attachment to create a vacuum. In this way both pressure-treatment (e.g., pressure-cooking) and vacuum-treatment of food (e.g., sous vide) is enabled - and in some embodiments cleaning.

### Network integration

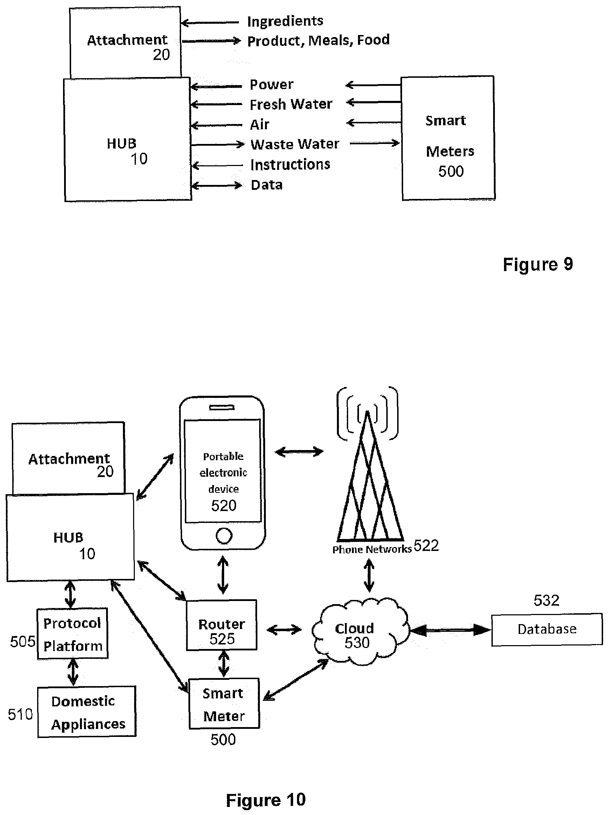

Figures 9 and 10 show the hub as part of a communications network and in data communication with various external devices, for example a smart meter 500.

More generally, hub 10 participates in a wider network, exchanging data with external devices, including:
- directly, with smart meters 500
- via a protocol platform 505 with other domestic appliances 510
- wirelessly with portable electronic devices 520 such as smartphones, tablets, and wearable devices to the phone network 522
- via a router 525 to cloud services 530 and the wider internet and a database 532 (for example arranged to store user preferences and recipes)

In this way, the communication network is arranged to use and/or exchange between nodes any of the following data:
- Status and/or diagnostics
- Sensor readings
- Usage information, including electric and/or water usage
- User preferences
- Recipes
- Instructions and/or component control
- Nutritional information and ingredient information
- Geographic and/or time information
- Software updates

Hub 10 communicates via multiple protocols, for example communicating with attachments 20 and nearby machines 510 and devices 520 via RFID, NFC, Bluetooth and/or Zigbee, and accessing household internet via router 525 using WiFi.

For example, hub 10 may receive instruction from a user's mobile device 520 via GSM instructing it to cook a specific recipe. It may then access the internet via WiFi to download that recipe, and communicate the steps of the recipe that it cannot carry out itself (based on the attachments 20 it knows it has) to nearby appliances 510 using NFC or infra-red.

In some embodiments hub 10 may switch between different communication modes or protocols dependent on its current activity, eg. to find a communications mode that is not subject to interference from an electric motor or induction-heater, or to find a communications mode which a particular attachment 20 will respond to.

The hub 10 may similarly switch between communication modes or protocols in order to discover and establish communications with other networked appliances 510 (eg. refrigerators, ovens etc.) in the vicinity and exchange telemetry, instructions, and other information with them.

### - attachment identification

An attachment identification module allows the hub 10 to identify different attachments 20 and their heating/cooling requirements via attachment recognition technology eg. by data transmitted from attachment 20 to hub 10 by RFID, or by visual systems (eg. a visual sensor of the hub). This may allow, for example, hub 10 to identify an attachment 20 via RFID, and then automatically download recipes involving that attachment. Where possible, connection standards are used to enable tool recognition across different brands.

An attachment database provides the hub control circuit 106 with a memory storing details of each attachment 20 it has encountered previously and software for running each attachment. Hub 10 may periodically delete the information of attachments 20 that have not been encountered for a predetermined amount of time, and/or transmit a signal to see whether the attachment 20 is still present in the vicinity of the hub 10. Lists of "present" attachments 20 may be periodically (or say in response to a push-notification) uploaded to an external server to be stored in a user profile, over-writing previous lists.

As a further example, the hub 10 may automatically identify the need for attachments 20 not yet owned by the user in a recipe that has been downloaded and prompt the user via an integral UI or mobile app to purchase them online.

### - updates

A software update module allows the hub 10 to periodically update (either time-dependently, or in response say to a push-notification from an outside server). Similarly, the attachment control circuit 156 may also include a memory containing software for operating the attachment 20 which is communicated to the hub 10, and which may be updated via communication with the hub 10. The hub 10 may check for updates to attachment software when the attachment 20 is first encountered. This may be for all attachments or only for those older than a predetermined amount of time.

### - remote control

In some embodiments, hub 10 is activated and controlled remotely. This can be performed either through communication with a mobile device 520 (e.g., via a mobile-telephone communications network 522 using GSM) or from instructions received from an external server on which a schedule of instructions has been previously stored by a user.

Hub 10 may be controlled by an app running on a mobile device 520 (e.g., mobile or smart phones, smart watches, tablets, laptops, Google Glasses, or other wireless-capable mobile communications devices) that communicates with the hub 10 either directly, via the router 525, or via a mobile telecommunications network 522.

The app may be a proprietary one tailor-made for use with the hub 10, or a third party app capable of running different machines made by different companies by automatically downloading software enabling integration with the hub on detection of it.

### - queuing

During periods when hub 10 is out of communication (eg. internet connection has failed) the hub may queue information ready for sending once communication is re-established. The hub may also assign information for sending an importance-level, and communicate information via different protocols depending on importance. The hub may queue low-importance information for periodic communication (eg. once a day) but send high-importance information immediately. Some information may be stored by the hub and only be sent in response to a push-notification (or other signal) from an external server. The hub may include security instructions for checking that a signal received from an external server or mobile device is from a trusted source.

### - external server

Telemetry from both the hub, and from attachments (via the hub) may be communicated (e.g., via the router) to an external server where it may be stored and later accessed. For example, diagnostic signals indicating failure of either the attachment or the hub may be communicated to an external server for storage and analysis.

An external server associated with the hub can check an internally-stored list of previously-registered hubs to see whether the hub associated with it is on the list. If not it prompts the user to register their hub. The external server can also attempt to check whether the new hub is a genuine proprietary product or a "knock-off" (i.e. counterfeit), either by requesting a password, or by sending an authentication signal to the hub and checking the response.

The external server can store a user profile including preferences, characteristics, and recipes of a known user and automatically communicate these to any new device detected associated with that user - for example to a new mobile device or hub detected being used by the known user. This user profile can be populated by the user filling a questionnaire including questions on food preferences and allergies when registering the hub, or can be automatically populated (at least in part) by extracting information from existing user profiles on, for example, social media websites that the user gives the hub or external server access to. The external server can regularly interrogate the hub via push-notification (or otherwise) to detect changes in user preferences, attachments and appliances in the vicinity of the user, user mobile devices, and recipes which it then stores in a user profile. Devices are identified by, for example, IP addresses, SSID, identifying data stored on a SIM, or other identifying data stored on the device and accessed either by the hub or the external server.

### - social media

Hub 10 can integrate with social media services provided on external servers. For example, it may automatically upload a picture of a finished food-product captured by a camera in the attachment to a social media service. Alternatively it can upload a plain-text version of the recipe as amended by the user to a social media site so that other users may try the same recipe.

### - smart meters

Smart meter 500 as used for metering the supply of household utilities such as gas and water, either directly or indirectly via, for example, a home router 525. Alternatively the smart meters 500 can upload information to a cloud 530 server from which the hub 10 downloads the information. Smart meters 500 may thus transmit the availability or lack thereof of a household utility to the hub 10, as well as utility usage data (eg. water-meter readings).

The hub 10 can de-activate an attachment 20 or component of an attachment if a utility (eg. water) needed to carry out a cooking process is no longer available. Utility usage data received by the hub can be displayed on the user interface of the hub 10 or otherwise communicated to the user (eg. via a mobile app).

In some embodiments, this allows for the determination and outputting of the approximate cost of the utility that will be used during cooking. For example, where the hub stores a recipe requiring 1 litre of water and 2 kW/hrs of electricity, the hub can interrogate the smart meter to see the likely cost of these utilities and display these costs to the user. In countries where utility costs vary over the day, the hub may also selectively perform functions during a low-cost period where it has leeway to do so (eg. it has tasks scheduled to be formed during a given period).

### Further features

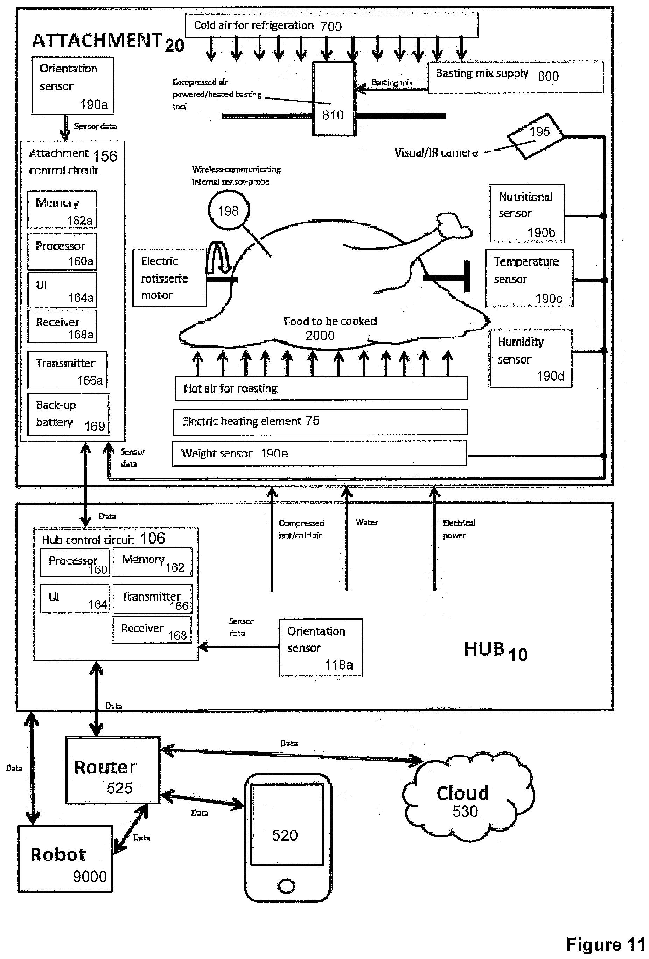

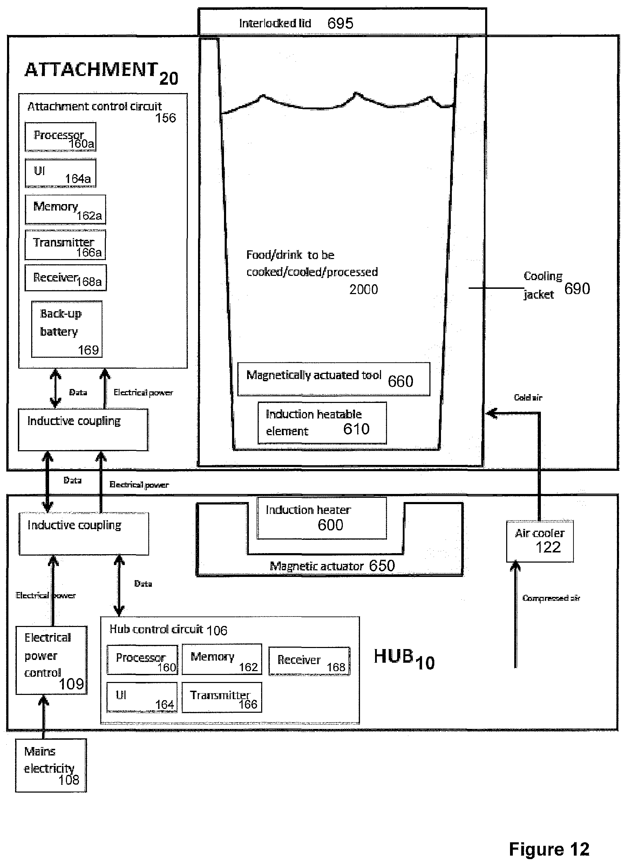

Figures 11 and 12 show further features of embodiments of the hub and attachments.

### - sensors

Attachments 20 may include a plurality of integral nutritional sensors 190 (eg. gas chromatographs, spectrometers), sensors for measuring food characteristics such as weight 190e, density, and particulate size (eg. optical sensors), orientation sensors 190a, and other sensors such as temperature sensors 190c and humidity sensors 190d - thereby enabling derivation of nutritional information of the food to be cooked 2000.

In some embodiments, attachments 20 include an integral camera 195 operating in the visual and/or infra-red spectrum, allowing detection of food colour, status, temperature and temperature uniformity, and (using image-recognition and volume-estimation technology resource that may be integral to the hub/attachment or cloud-based) food-type and food volume.

Furthermore, a wireless-capable sensor-probe 198 may be inserted into the food 2000 to detect temperature and other food characteristics inside the food, and transmit this data to the attachment control circuit 156. Examples of such probes include the GourmetSensor / GourmetPilot power monitoring sensors supplied by Cuciniale GmbH.

A processor 160a included in the attachment control circuit 156 may control elements within the attachment 20 including tools, heating modules 120 and cooling modules 122, and air flow control modules 140 based on feedback received from these sensors 190, and on data and instructions transmitted to the attachment control circuit 156 from the hub 10. Alternatively, control based on sensor feedback may be carried out by the hub control circuit 106 via a data-link with the attachment control circuit 156.

Data from these sensors 190 can either be displayed on an integral user interface (UI) 164a of the attachment, or transmitted to the hub 10 to be displayed by its integral UI 164, or transmitted via the hub 10 to a mobile device 520 to be displayed there, or to an external server (cloud 530) to be accessed online.

For example, a user may enter into the hub 10 instructions to mix/beat/heat food 2000 inserted into the attachment 20 until it reaches a given temperature/texture/consistency. Alternatively a recipe including instructions to prepare food 2000 with the desired characteristics may be downloaded to the hub 10.

The hub 10 transmits the desired food characteristics to the attachment 20. The processor then controls elements in the attachment (motors, heaters, hot and cold air-flow-control elements, etc.) to process/cook/etc, the food in the attachment until the data received from the sensors 190 indicates that the desired food characteristics have been achieved.

The processor in the attachment will transmit signals indicating the status of the food in the attachment during processing/cooking of the food in the attachment to the hub based on data received from the sensors, and transmit signals indicating that the desired food characteristics have been achieved once data from the sensors indicates that the desired end-result has been reached. Other processes such as fermentation may be similarly achieved.

The hub 10 may output food status information to the user either directly via a UI, or via an app installed on a user mobile device. The attachment 20 may also transmit food status information directly via an integral UI, or integral lights, buzzers, bells, or by changing colour. The hub 10 may optionally cause air from within the attachment 20 to be exhausted to the outside, either periodically, or in response to an event such as completion of cooking, thus allowing the user to monitor progress through the smell of the food.

### - robots

In some embodiments, hub 10 communicates telemetry information, either directly or indirectly via eg. router 525, to an external robot 9000 in the vicinity of the hub 10. This data may include the orientation of the hub 10, whether an attachment 20 is properly attached, food and cooking status, recipe steps, whether or not the robot 9000 is in contact with the hub 10 and/or its attachments 20, and angle and distance information indicating the spatial relationship between the hub 10, its attachments 20, and the robot 9000.

Hub 10 may also receive cooking instructions from the robot 9000, In this way a robot 9000 may use the hub 10 and its attachments 20 safely without requiring additional sensors and intelligence specific to the hub 10 and its attachments 20.

Attachments 20 are configured to be "robot friendly" i.e. have special handling points ergonomically suited to a mechanical "arm / hand" to facilitate the interchange of attachments by a robot.

Hub 10 may transmit recipe steps to the robot 9000 (and to other appliances 510 in the vicinity of the hub) for it to perform. It may also transmit user preferences/characteristics to the robot 9000 (and other appliances in the vicinity of the hub) so that recipe steps may be performed so as to conform to user preferences/characteristics. To do this it may convert the plain-text instructions shown to a human user into machine-readable instructions.

### - food safety

The material of the hub or part of the hub, or of attachments such as bowls, tools, etc., could have anti-microbial properties. Periodic heating or refrigeration of the hub and attachment components can be carried out by their respective control circuitry in order to eliminate microbes or reduce microbial growth. The hub or its attachment may include a UV sterilisation unit built on to it which is activated periodically by the hub control circuit or attachment control circuit to maintain a sterile environment.

### - colour coding

In some embodiments, the material of the hub, or part of the hub, or attachments such as bowls, tools, etc., have opto-electro chromic / electro-chromic properties to temporarily change the visual effect. Colour schemes are downloaded automatically from the internet either associated with, or in response to, a recipe that are suitable for that recipe. For example, Spanish national colours are downloaded in response to a recipe being downloaded to the hub 10 with meta-data identifying it as a Spanish dish, and the hub 10 would then change colour to conform to the Spanish national colours.

Thermochromic elements may also be integrated into the hub 10 and its attachments 20 to indicate when a component is hot/cold.

### - removable heater element

Generally, a heater element - typically an electric heater element 75 - is provided. In some embodiments, heater element 76 is in the form of a removable heater cassette, typically annular and adapted to fit between hub and attachment and may also be usable separately as a heating plate.

### - inductive heating and power

Figure 12 shows a hub with inductive coupling. In some embodiments, hub 10 includes an electrically-powered inductive heating ring 600 located so as to heat an induction-heatable component 610 within the attachment 20. The output of this inductive heating ring 600 may be controlled directly by the hub control circuit 106 based on user input, or based on sensor data from within the hub 10, or a programmed recipe-step. The output of the inductive heating ring 600 may also be controlled by the attachment control circuit 156 transmitting control signals to the inductive heating ring 600 in the hub 10 via the hub control circuit 106. These signals may be based on user input, a pre-programmed recipe step, sensor feed-back from within the attachment 20, and user input into the attachment 20.

### - magnetic actuation

An attachment 20 may also derive electrical power from the hub 10 via induction, for example as attachment blades driven via an induction motor.

In some embodiments, hub 10 includes a magnetic actuator 650 for driving a magnetically-actuated tool 660 or other compatible implements such as stirrers or blades within the attachment 20.

Magnetic actuation has the advantage of eliminating the need for a mechanical drive connection between the hub 10 and the attachment 20 and avoids having to locate motors within the attachment 20. Control of the magnetic actuator 650 may be in a similar fashion to the inductive heating ring 600, and may be co-located with it so as to achieve simultaneous inductive heating and magnetic stirring.

Generally, either top-driven or bottom driven stirrers may be provided.

### - cooling jacket

In some embodiments attachment 20 is a cooling / heating air jacket 690 configurable to fit over or around another attachment. The air jacket attachment may be constructed of specialist materials to operate over a large range of temperatures such as -30°C to + 200°C, which may require the addition of a thermally insulating layer between the high or low temperature material and the user to prevent injury to the user. The materials in question may be refractory ceramics, metals, surface treatments and in some circumstance plastics and elastomers. Passive/active lid cooling may also be provided.

### - kitchen appliance comprising cooling and/or heating system(s)

The hub may take the form of a kitchen appliance providing cooling and/or heating. Hot countries have ambient temperatures of up to 40°C (and up to 52°C in Iran and Saudi Arabia, and even up to 53.3°C in Pakistan) with little seasonal variation. Butter melts to a thin liquid at approximately 32°C and chocolate typically melts at around 36°C; for certain recipes, the liquid form of these ingredients too soft, and therefore inappropriate.

Furthermore, some recipes need to be cooled quickly (which may not be practical or possible (e.g. via ambient cooling) due to physical laws); however, allowing recipes to cool by standing may take an hour.

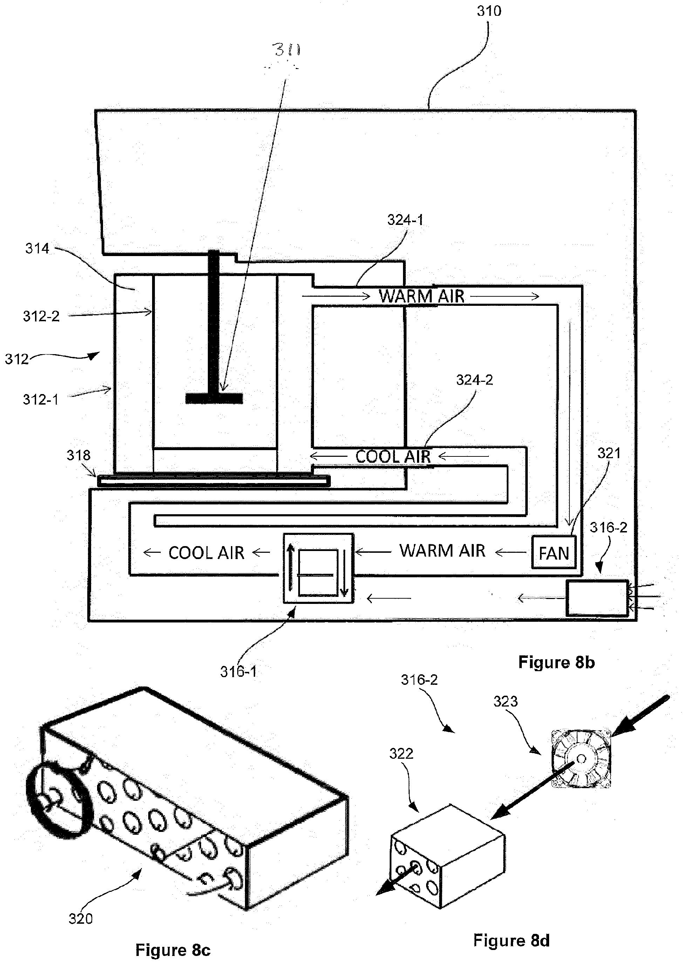

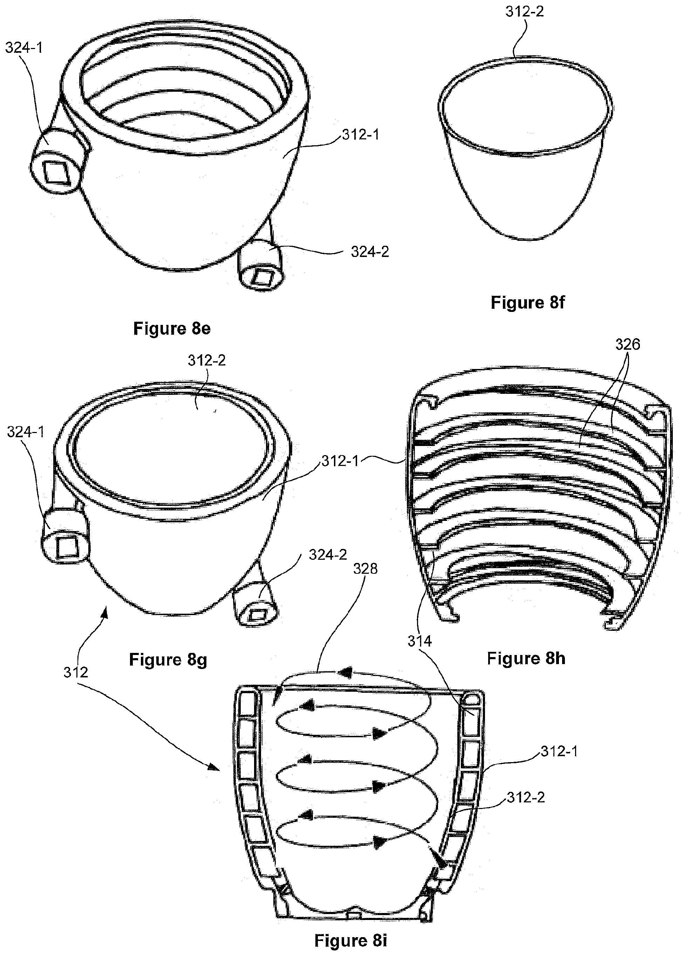

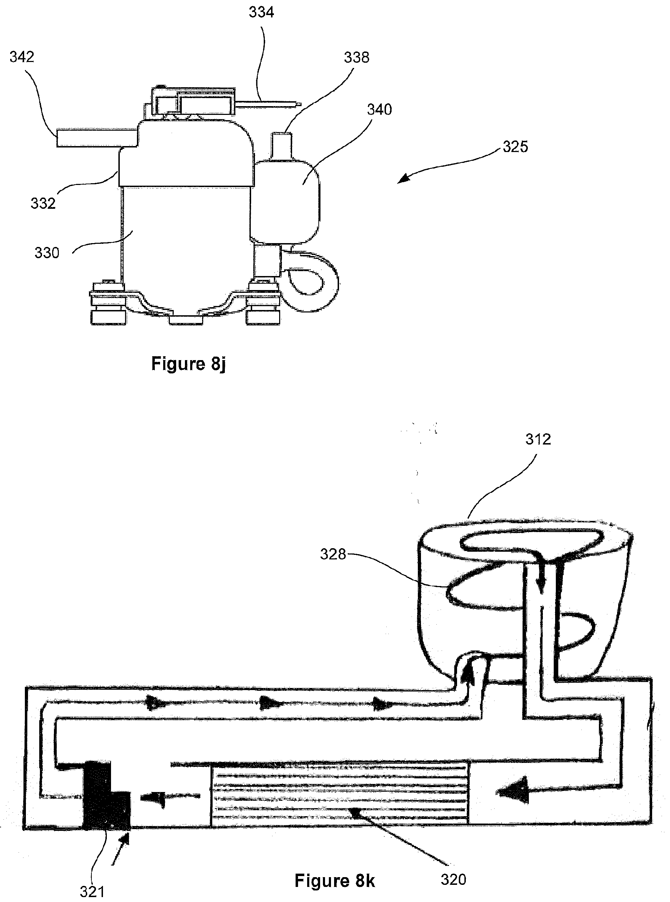

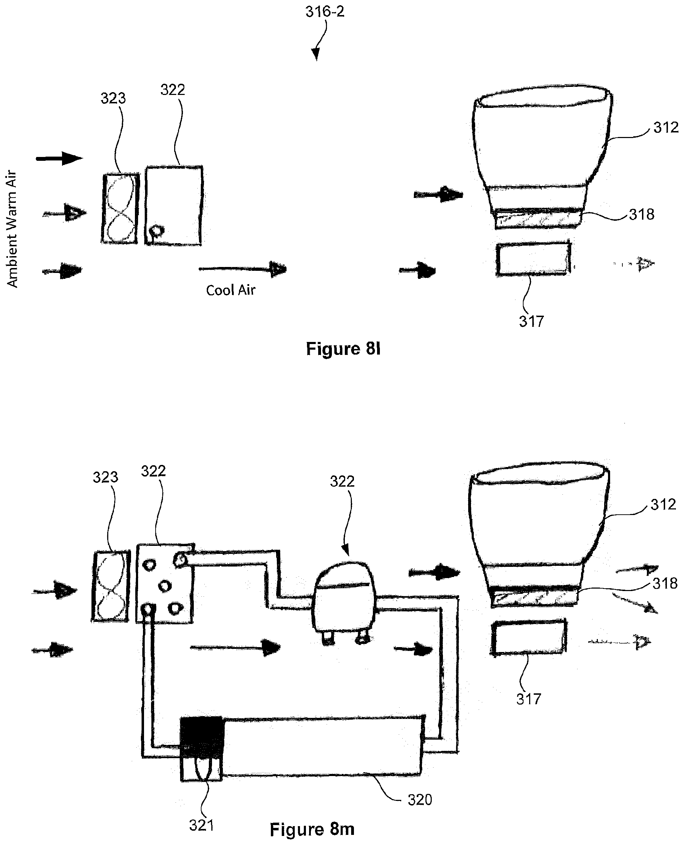

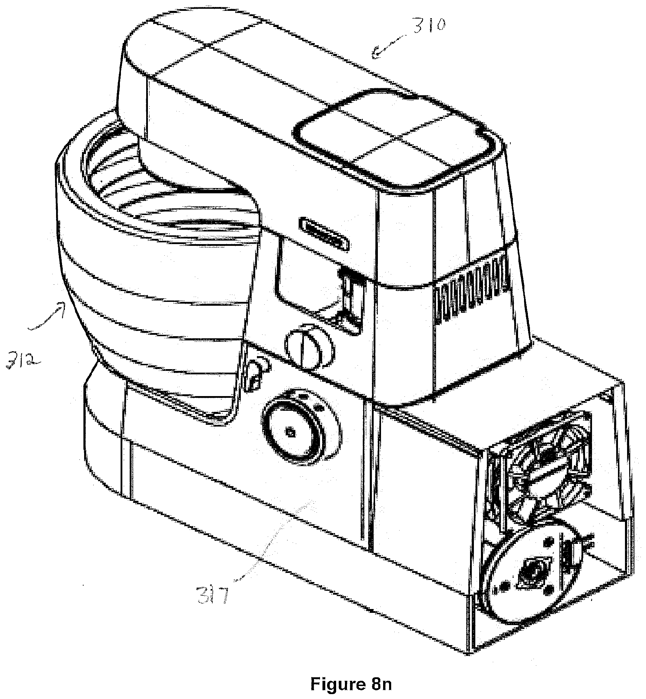

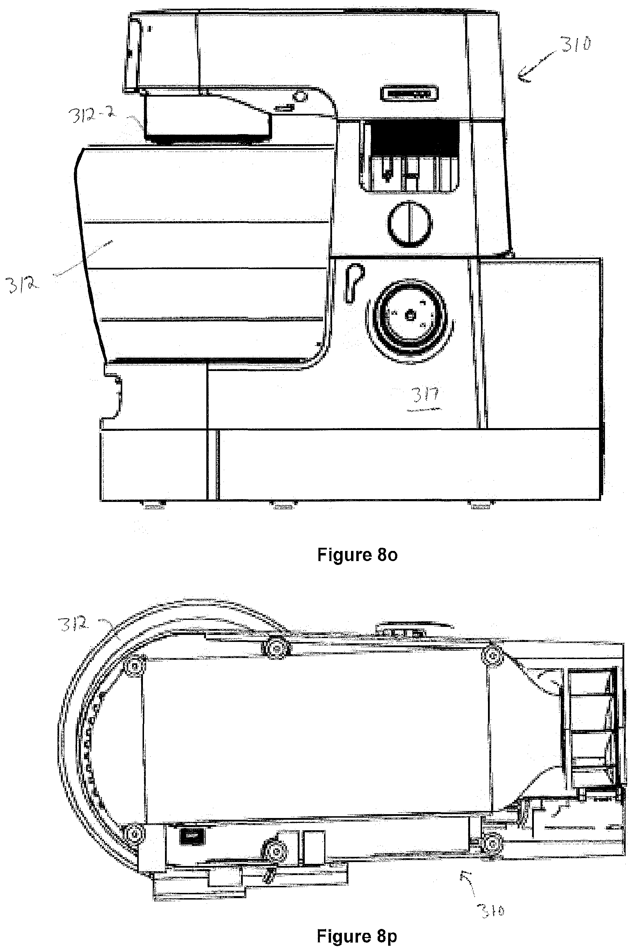

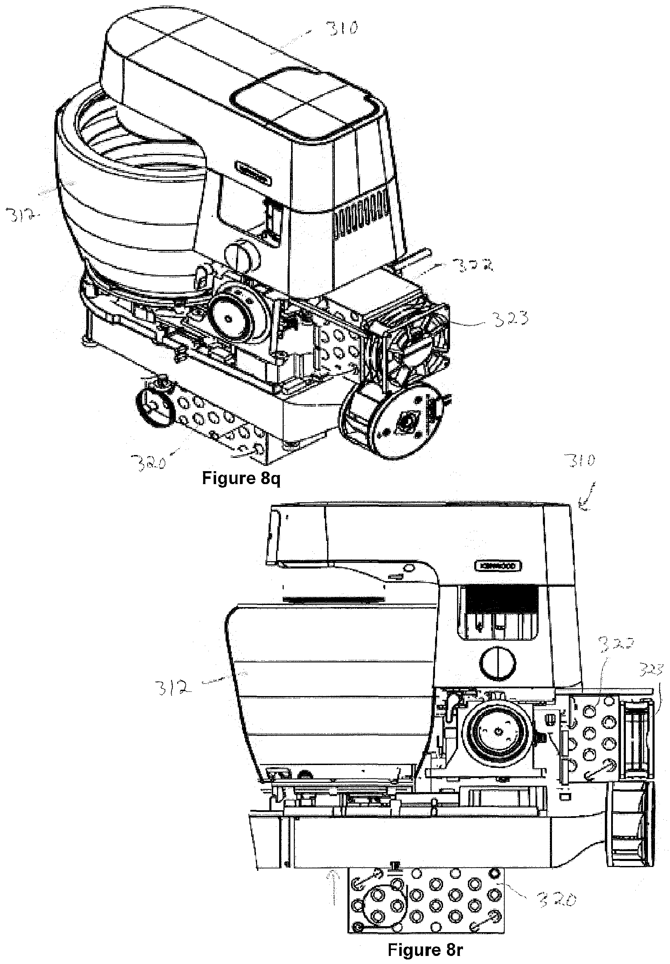

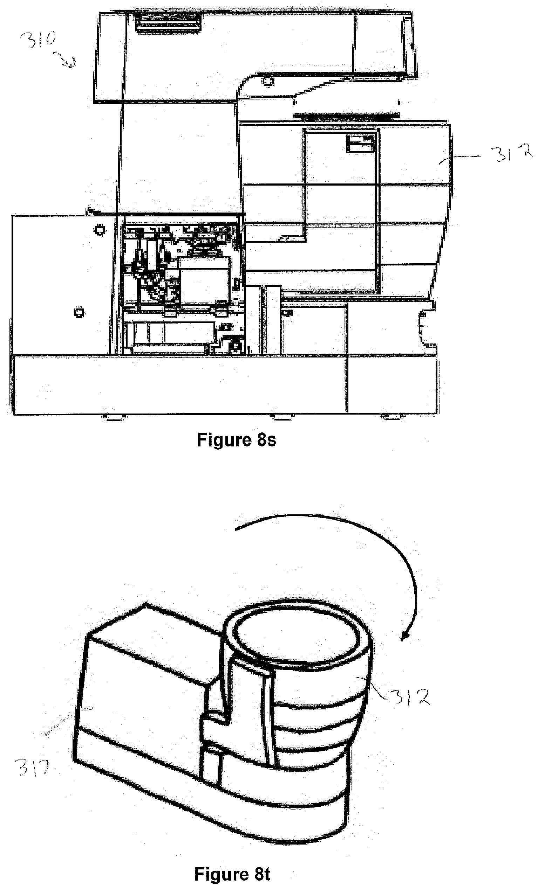

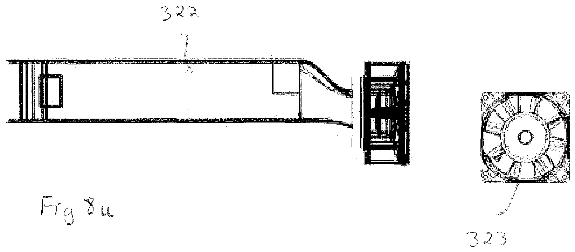

Figures 8 show a kitchen appliance for food, for example a stand mixer 310, that is arranged to heat and/or cool foodstuff. In particular, as shown in Figure 8b, the stand mixer 310 comprises a hollow-walled mixing bowl 312 (for example, as per that shown in Figure 8a) comprising a cooling / heating jacket (for example, as per that shown in, and described with reference to, Figure 12). The jacket 314 (formed between an inner 312-1 and outer 312-2 bowl) allows for cold and/or hot air to be passed within the jacket, thereby to control the temperature of the bowl (and its contents).

For example, by introducing cold air into the jacket 314, butter can be kept at 20°C in a 40°C ambient temperature. If it is then desired to heat the butter, this is achieved by introducing ambient, warm or hot air into the jacket 314 (and therefore heating all the way around, and all the way up, the sides of a mixing bowl 312) and/or by activating an induction heater 318 of the stand mixer. Combining induction heating and heating of the jacket, a faster and more efficient means of heating is achieved compared to ambient heating, and recipes can therefore be prepared faster.

As a result, such kitchen appliances can continue to have full use in high ambient temperature environment and countries allowing, for example, accurate tempering of chocolate, as well as improved preparation of butter-, cream- (including in the preparation of Bavarian cream and Vanilla panna cotta) and egg-based recipes.

The stand mixer comprises a first cooling system 316-1 in the body or base 317, which comprises a refrigeration system (as shown in Figure 8m and described in more detail below) that is fitted to the underneath of the stand mixer, which cools air flowing over it to preferably 10 to -10°C, and more preferably 0°C to -5°C. Cold air cooled by the refrigeration system is circulated by the fan 321 around the jacket 314 to cool down the bowl and its contents. The process by which the air is circulated around path 328 over heat exchanger 320 is shown in Figure 8k.

Both the first cooling system shown in Fig. 8m and the air-circulation system shown in Fig. 8k are, in operation, closed loops, albeit the air-circulation system shown in Fig. 8k may become open to the environment when mixing bowl 312 is removed. For this reason it is desirable to use air (which is non-hazardous, but possibly not an ideal coolant in every respect) in the air-circulation system of Fig. 8k whilst still receiving the benefit of using a dedicated refrigerant (e.g., an F-Class refrigerant such as R134A) in the first cooling system shown in Fig. 8m.

To utilise the stand mixer 310 for cooling using the first cooling system 316-1, a fluid, such as air, is used as the medium to convey heat between the product (e.g. the foodstuff to be processed within the bowl 312) and the refrigeration system. The stand mixer further comprises, as part of the first cooling system and the refrigeration system, an evaporator heat exchanger 320, an example of which is shown in Figure 8c. Air is drawn (via centrifugal fan 321) over the evaporator heat exchanger 320 to cool the air below the desired (*e.g.* user-selectable) temperature, and then passed over the foodstuff that is to be cooled and/or into the jacket 314 (via path 328). This is a clean system for accomplishing the cooling required and allows for easy removal of the bowl 312 (or simply the inner bowl 312-2) and for easy cleaning.

The evaporator that cools the air forms part of the refrigeration system, which also comprises a condenser 322 and a compressor 325.

Heat is transferred by refrigerant inside the tubing to the compressor 325 (shown in Figure 8j). The compressor 325 increases the pressure and temperature of the refrigerant above the ambient air temperature in the kitchen. The heat in the refrigerant is rejected to air through the condenser 322, which is used to condense a substance from its gaseous to its liquid state, typically by cooling it. A fan circulates hot air to reject the waste heat out of the kitchen appliance, and for example into the kitchen, as warm air. At the same time, as described in more detail below, a second cooling system 316-2 cools the condenser and thus the hot refrigerant gas vapour by drawing ambient air over the condenser.

The condenser coil is constructed in the same fashion as the evaporator coil, with hot refrigerant (e.g. R134A, R400A, propane, R717 and other F-Class refrigerants, or even any suitable hydrocarbon) from the compressor entering at the top of the condenser. Air is passed over the outside of the condenser from the ambient space (e.g. kitchen) and heat from the refrigerant inside transfers to the tubing and fins of the condenser, and then into the air. The condenser dissipates heat, into the surrounding room.

The refrigerant compressor 325 is a special kind of pump that draws the refrigerant vapour from the evaporator 320 outlet, and compresses it (from an inlet 338, and then to an accumulator 340) to a high pressure and temperature. Importantly the temperature of the vapour is now above the surrounding ambient air (*e.g*. which may be at 50°C) and it is then output (via outlet 342). The compressor 325 uses an internal electrical motor 330 to drive the compression process (occurring within a rotary compressor 332), and the electrical energy (supplied via an electrical inlet 334) consumed is converted into heat which is passed to the refrigerant.

Developments in compressor technology have reduced the size of compressors from the size of a domestic kettle to smaller than a tea cup. In the cooling system shown in Figure 8m, a rotary-type compressor is used, which are smaller and lighter than other forms of compressor. For example, the weight of the compressor is approximately 800g-1Kg, and preferably approximately 900g-950g, which may be 10 times less than other such compressors. Formerly, compressors were relatively large and heavy at approximately 15kg. New lighter compressors make for a cheap and more compact kitchen appliance. The physical size and efficiency (*e.g*. with respect to power) of the cooling system is therefore improved.

Such a compressor can also be used in any kitchen hub as described above, for example to provide compressed fluid, to drive any attachment and/or as part of a refrigeration system.

Furthermore, new manufacturing techniques, such as 3D printing in plastics and metals, allow for reduced-size heat exchangers to be produced, which may nonetheless provide increased efficiency.

Polymers (*e.g*. crystalline and semi-crystalline polymers such as polynorbonenes) with high heat transfer capabilities are also available, which are available to be moulded in large quantities, thereby allowing for cost-efficient manufacture and allowing the complexity of heat exchangers to be reduced substantially; this, combined with modern (more accurate) 3D design software, can be utilised to create geometries previously not possible.

The refrigeration system comprises a filter drier which carrier, under high pressure and high temperature, refrigerant into the expansion device; fine copper tubing (capillary tubes) are used for this purpose. In this way, the pressure restriction of passing the refrigerant liquid through the capillary tube meters the flow of refrigerant, balancing it with the inlet and outlet pressures. In this way, the use of complex valve systems is avoided. The pressure restriction causes a significantly lower pressure at the outlet of the tube. When the refrigerant exits into the lower pressure area it expands, and drops in pressure to a point where it will boil at a temperature below that of the surrounding area. This refrigerant is now the boiling liquid at low temperature that enters the evaporator to continue the process of cooling.

A second cooling system 316-2 (for example, an air-cooling system) blows ambient air to cool the refrigeration fluid comprised as part of the first cooling system 316-1 to a liquid and also to cool the kitchen appliance more generally, including its electronic control circuit board(s) 317 and the induction heater 318. The process by which the second cooling system 316-2 operates is shown in Figures 8I.

As shown in Figure 8l, the second cooling system 316-2 uses ambient (warm) air that is drawn across the condenser by means of a fan 323 to cool down the refrigerant gas of the refrigeration system back to a liquid to be able to repeat the refrigeration process, the air is also used to cool down other parts of the stand mixer including the on-board electronics (e.g. the electronic control circuit board(s) 317) and the induction heater 318. The fan 23 thus doubles as a cooling fan for induction heater 318 and electronic control circuit board(s) 317, reducing the need for separate cooling fans for these components.

The cooling systems of the stand mixer are available to remove approximately 300-500 Joules, and more preferably approximately 400 Joules, of thermal energy out of the air every second (*i.e.* 300-500 Watts, and more preferably approximately 400 Watts).

Generally speaking, water needs approximately 4,180 Joules removed per kg to reduce its temperature by 1 degree Celsius. Accordingly, by removing thermal energy at 400 Watts, 1Kg of water will be cooled by 1°C in approximately 10.5 seconds (assuming perfect heat transfer), so a potential temperature drop of approximately 5,7°C is possible per minute, and a temperature drop from 70°C to around 10°C in 10.5 minutes. Realistically, the thermal transfer through the bowl will be lower, and hence the thermal transfer rate will be lower.

For example, the stand mixer is available to run on 230 Volts, drawing 170 Watts.

To improve thermal transfer, the foodstuff intended to be cooled or heated is mixed by means of the stand mixer.

Using the aforementioned methods, the cooling systems cools the food (to below that of the ambient temperate) at an improved rate.

Figures 8n-s show various views of the stand mixer 310. The stand mixer includes a motor for driving (e.g. rotating) a tool 311. In one example the stand mixer is a hub and the bowl is the attachment for the hub.

### -bowl and air jacket

As best shown in Figures 8e-8i, the jacket 314 creates a closed path for the cooling air to circulate around the inner metal mixing bowl 312-2. The outer bowl 312-1 comprises inwardly protruding walls 326 that form (when the inner bowl is docked in the outer bowl) a helical path 328 around which the cooling air (or any fluid more generally) is circulated within the jacket 314.

The cooling air input into the jacket is colder than the mixing bowl and heat transfers from the bowl 312 to the cooling air. At the same time, this lowers the temperature of the bowl to beneath that of the contents inside the bowl, and heat also transfers from the contents of the bowl, cooling and lowering the temperature of the contents of the bowl.

Warmed up air flows around the path 328 and out of the jacket 314 via outlet tube 324-1 (arranged above the inlet tube 324-2, thereby making use of the rising effect of the warmed up exhaust air). The inwardly protruding walls 326 (or "spiral flutes") direct air flow from the bottom of the bowl to the top of the bowl. The warmed up air is returned to the evaporator 320 to be cooled again and recirculated.

Bowl 312, including the inner 312-2 and outer bowls 312-1, is made from any of: Carbon Steel; Nickel; Copper; polymers (as described above); and/or Aluminium. In this way, the heat transfer rate of the bowl 312 are improved when compared to that of a bowl formed from stainless steel (as is typically used for conventional bowls), with Copper having a heat transfer rate increase of approximately 24 times compared to that of Stainless Steel,

The mixing bowl 312 comprises a recognition system (e.g. a mechanical interlock, electrical switch, etc.) to allow the stand mixer to recognise when the mixing bowl is - specifically when the inner and/or outer bowl are - (correctly) attached. The stand mixer allows cooling and/or heating (by whichever of the aforementioned processes) only when the bowl is correctly attached to the stand mixer.

The bowl (*i.e*. the outer bowl 312-2) is provided with an engagement formation for fastening onto the stand mixer, as well as a coupling formation for allowing a fluid path between the hollow wall of the bowl and the stand mixer. The inner bowl 312-2 is dimensioned to sit within the outer bowl 312-1 thereby to create a sealed volume - the jacket 314. The bowl is provided with a quick release coupling to make quick and clean connection of the bowl to the stand mixer.

As shown in Figure 8t, the bowl is inserted and twisted onto the stand mixer base to lock into position (e.g. via a complementary bayonet connection on the mixing bowl and the stand mixer base) in order to engage the bowl to the stand mixer to create a fluid connection between the two. By providing the inlet and outlet tubes 324 at differing heights the bowl is available to be rotated so as to bring the tubes 324 into alignment and engagement (*e.g.* via a bayonet engagement) with their respective ports on the stand mixer without interfering with each other's port.

The stand mixer comprises an identification system to identify what type of bowl is attached to the stand mixer (*e.g*. including which of the inner and/or outer bowl is/are attached, and more generally what kind of bowl is attached, such as a bowl having a particular volume). In one example, the identification system comprises an RFID platform, comprising an RFID reader (e.g. in the stand mixer) for reading a tag associated with the bowl and that allows the system to function according to the bowl type (*e.g*. to adapt heating / cooling, speed of the tool, and user interface information). In other examples, the identification system comprises connectors having NFC functionality such as those available from SMC corporation and/or the Colder click connector (Identiquick, available from the Colder Products Company of St. Paul, Minnesota, USA).

The identification system informs the electronic circuit boards (specifically a controller) as to what identification data is derived from the bowl; in dependence on this data, the controller automatically sets operating variables such as pressure, flow rate and operating time duration to match what is required for the bowl that has been connected to the equipment port. This process also extends to tools that are attached to the stand mixer.

Where an incorrect / unsafe connection is made (*e.g*. between the bowl and stand mixer, between the inner and outer bowl, or in that an incompatible (for a given function) bowl is connected), the user is alerted to the incorrect / unsafe connection. In this way, the risk of human error in setting operational controls is reduced, as is the potential for equipment and user, and ensures effective and correct processing of food. Furthermore, this process is used to ensure that only approved attachments (including bowls, lids, heaters, tools, etc.) are used with the stand mixer, eliminating the use of expired, misapplied or inferior alternatives that can compromise performance and threaten product reputation (as well as reducing exposure to false warranty claims).

Thus the appliance uses two closed cooling circuits (one operating with a fluid such as air, and the other operating using a dedicated refrigerant such as e.g. R717) to cool the bowl. The cooling circuit that uses refrigerant serves to cool the air circulating to the bowl in the other circuit, by way of a cooling jacket associated with the bowl. Thus the escape of refrigerant into the environment when the cooling jacket is removed from the machine can be avoided. Moreover, as air is trapped in a closed circuit during cooling, the collection of moisture from air drawn in from the environment is also avoided.

### - aeration whisk

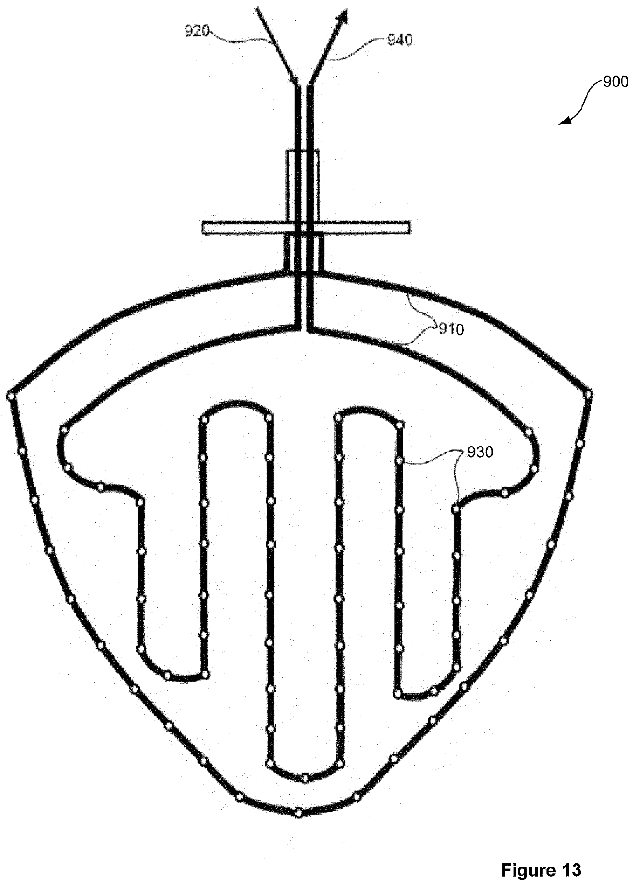

An example of an aeration whisk, through which air is channelled and output to food that is to be whisked, is shown in Figure 13. The aeration whisk is arranged to be coupled to and operated by the hub 10 or an attachment 20. The whisk 900 comprises capillary tubes 910 that are arranged to be submerged into food. The capillary tubes are arranged to channel air, which enters the whisk at an air input 920 (e.g. from the hub 10), and exists through holes in the capillary tube 930 into the food and/or through an output 940 at the end of the path of the capillary tubes. In this way the whisk is arranged to whisk, cool, heat, dry and/or moisten by means of the input air (whose moisture content is available to be varied), and aerate food.

### - safety locking

The food receptacle may be enclosed by a lid 695 which is locked to the attachment automatically when the attachment control circuit detects conditions inside the food receptacle that may be dangerous such as, for example, high or very low temperatures, or the action of tools within the food receptacle.

### - internal refrigerator

Particularly where the hub 10 is a built-in fixture in a kitchen, it may be desirable for the hub 10 to have an internal cooling/cooking means. For example, the hub may include a refrigerator 700 operating using the internal compressor of the hub. Alternatively, the compressed cold air produced by the hub may be directed to an external refrigerator when not needed to operate an attachment.

### - ingredient reservoirs

In some embodiments, reservoirs 800 or storage compartments for ingredients or condiments are provided within the attachment 20 and/or the hub 10. These are used by tools 810 within the attachment during cooking steps (e.g., basting mix for a basting tool).

More advanced embodiments include sensors in these reservoirs for determining the filling state. This information may be fed back to the user - also allowing the user to be prompted to re-fill the reservoirs, or it may be transmitted to suppliers via the internet to order new ingredients automatically. The attachment control sensor receives feedback from, and can then inform the user to fill re-fill, either by the attachment user interface 164a, or (via the hub control circuit 106) the hub user interface 164, or (via the hub control circuit 106 and the router 525) an app on the mobile device 520.

### - user interface

A control user interface can be a touch-sensitive visual display either integral to the hub 164, or integral to an attachment 164a, or separate from the hub and in direct or indirect communication with the hub (such as via a smartphone 520 or tablet).

This visual display is the mirror-image of a cooking-app residing on the user's mobile device mirrored via a protocol such as MirrorLink®, with user icons dynamically re-sized and re-positioned suitable for the proportions of the visual display on the hub.

User interface elements can be downloaded from attachments 20 to the hub 10 in order to upgrade the display to run the attachment. Alternatively either the hub itself or the mobile app can download these UI elements in response to communications from the hub indicating a new attachment and its identity.

### - recipes and user preferences / characters

Responsive to user interaction hub 10 may download recipes from the internet or receive them from an app on a user mobile device 520. These recipes may include a series of cooking steps for execution by the hub 10, its attachments 20, and appliances in the vicinity of the hub 510, 9000. These recipes may include desired food characteristics (colour, texture, density, temperature) to be achieved at the end of each step.

Recipes may be in plain-text that so the hub control circuit 106 or a mobile device 520 app can automatically parse to identify cooking steps, ingredients and ingredient quantities, desired food characteristics, analyse likely nutritional content, identify required attachments and appliances for completing the recipe, discard information not relevant to the recipe, and other steps required to convert the recipe into one that can be performed by the hub and appliances within its vicinity.

Alternatively, this parsing may already have been performed by a cloud-based service before the recipe was downloaded to the hub 10. For example, the URL of an online recipe found by a user surfing the internet on a mobile device may, in response to a user interaction, be transmitted by an app operating on the mobile device via the internet to an external server that automatically parses the plain-text recipe found at that URL to convert it into a parsed recipe that can be performed by the hub and its associated appliances, and then transmits the parsed recipe to the hub for it to be performed.

In some embodiments, hub 10 determines nutritional data or recipes from food packaging, either by using a suitable scanner to read a data tag (such as an RFID tag or barcode) or by simply reading the contents from the packaging using OCR.

The recipe may also be inputted by the user in plain-text into either the hub using its user interface, or the mobile device app, prior to parsing either by the hub or by an external server. The app may also allow a user to build up a machine-readable recipe by selecting options related to cooking steps from drop-down menus displayed to the user.

Desired food characteristics contained in recipes may be amended according to known user preferences/characteristics. This amendment may be performed automatically by the hub control circuit prior to transmitting the desired food characteristics to the attachment control circuit, or it may be performed by the processor in the attachment control circuit. For example, where a user is known to prefer food or drink that is thicker than is called for in the recipe from which the original desired food characteristic is derived, the hub control circuit will amend this desired food characteristic according to the user preference before uploading it to the attachment.

Recipes downloaded by the hub may also be amended according to known user preferences/characteristics stored in a user profile either on the hub or on an external server. For example, before displaying the ingredients of the downloaded recipe to the user the hub (or the external server) may substitute non-allergenic ingredients for allergenic ones based on known user allergies, or non-meat substitutes (eg. tofu) for meat where the user is known to be a vegetarian/vegan, based on a list of potential substitutes stored by the hub or automatically downloaded from an external cloud server. If more than one potential substitute is known, the user will be prompted to select their preferred one and this preference will be stored for future use.

Recipes and desired food characteristics may also be amended according to sensor data received from bio-sensors associated with the user or the user's mobile device, or according to data from other household appliances communicating either directly or indirectly with the hub. For example, where data received from an intelligent refrigerator which detects the presence of food items inside it and their expiry dates using, eg. RFID tags indicates that an ingredient is not available, the hub may amend the recipe to replace that ingredient with an acceptable substitute. In another example, where a food ingredient is close to its expiry date, the hub may amend the desired food characteristics to ensure that it is cooked more thoroughly. Any amendment of desired food characteristics and recipes may be done automatically by the hub, or after interrogating the user to seek their approval of the amendment via the hub UI or mobile device app.

The hub may selectively upload certain user preferences/characteristics to the attachment based on criteria including whether the attachment has sensor capabilities related to that preference/characteristic, and whether that preference/characteristic belongs to a pre-determined category (eg. allergies). For example, medical or dietary preferences, which may have either been directly input by the user or automatically downloaded from a cloud server or mobile device, may be uploaded to the attachment. The processor in the attachment will then monitor sensor data from the attachment's integral sensors to detect whether criteria related to the user preferences/characteristics are present.

For example, when the presence of an allergen related to a user allergy is detected, the processor of the attachment may output a warning message either directly from the attachment (eg. using a UI integral to the attachment, or by changing the colour of the attachment, or by sounding an integral warning buzzer, or lighting an integral warning light), or may transmit warning information to the hub which causes it to display a warning to the user either directly via the hub's UI or via an app installed on a mobile device associated with the specific user who has that allergy. The hub may optionally only cause an app associated with the user having the relevant preferences/characteristics to output a warning message if they are present in the vicinity of the hub according to presence data of the user's mobile device detected by the hub, thus avoiding messages being received related to food that the user concerned is unlikely to eat as they are not in the vicinity of the hub.

Recipes may also be amended based on ingredient information detected by the attachment and transmitted to the hub. For example, where the hub has downloaded a recipe specifying a given amount of a particular ingredient, and sensor means in the attachment (eg. a weighing sensor, or camera with associated image-recognising and volume-estimating means such as a cloud-based image recognition service that the attachment accesses via the hub) detects that more or less of that ingredient than the amount required by the recipe has been inserted into the attachment and transmits this data to the hub, the hub may prompt the user via a user interface or mobile device app to ask them whether they wish to adjust the quantities of other ingredients in the recipe accordingly. If they accept the suggested amendment, the hub will then automatically amend the quantities of other ingredients in the recipe in proportion to the difference between the amount of the detected ingredient required and the amount detected by the attachment so that the ratio between these ingredients remains the same. If they do not accept the amendment, this may instead be stored as a user preference indicating that they prefer more or less of the ingredient concerned, and in future used to automatically amend recipes downloaded by the hub to include more or less of the ingredient according to the user's preference.

For example, where the attachment 20 detects via weight sensors that the user has only inserted half the amount of salt required by the recipe into the attachment, the hub may prompt the user to ask whether the recipe should be amended to reduce the amount of all other ingredients by half. Where the user agrees to this, the amount of all the other ingredients required by the recipe are also reduced by half, resulting in half the number of portions being produced. Where they do not agree to reduce the amounts of the other ingredients, this instead indicates that the user prefers food with lower salt-content, and stored as a user preference. Where the reduction in salt is stored as a user preference, the hub may amend future recipes to reduce the amount of salt by half. This preference may be uploaded to an external server to be stored in a user profile that can be accessed and edited by the user online.

The hub may also automatically amend a recipe based on feedback from nutritional sensors within the attachment to maintain a specific nutritional content for the end food product. For example, due to natural variation in sugar content amongst fruits of the same species, sugar content of mixed fruit-drinks may vary even when the same amount of each fruit is used, resulting in either an excessively or insufficiently sweet end product. The hub control circuit may detect variations in sugar content of fruit inserted into the attachment via data signals from nutritional sensors located in the attachment relayed to the hub control circuit via the attachment control circuit and, for example, increase the amount of sugar to be added by the user to the drink to achieve a desired sweetness in a given recipe.

Where successive recipe steps may be performed concurrently by the hub and another appliance known to be in the vicinity of the hub, the recipe may be amended so that these steps are performed concurrently. For example, where one ingredient is to be mixed and another ingredient is to be heated, and a mixing machine is known to be in the vicinity of the hub, rather than instructing the user to perform these steps in succession on the hub, the user will be told to perform the heating step using the hub (with a suitable heated attachment) and, whilst the heating step is being carried out, perform the mixing step using the mixing machine.

To ensure that the recipe on the hub remains consistent with the recipe on the mobile device, when an amendment of a recipe is performed by the hub, the amendment is transmitted to the mobile device (and vice-versa). The amendment may either be transmitted directly from the hub to the mobile device (or vice-versa), or uploaded to an external server which then forwards the amendment to the mobile device (or hub) via a push-notification. Consistency in user characteristics/preferences, available ingredients, appliances and attachments, stored in user profiles stored on the hub, the mobile device, and the external server, may be maintained in the same fashion.

### Example of operation

### - general cooking

Generally, the hub and attachments are intended both to simplify the cooking process and to provide for a more varied range of cooking options. For example, the hub may enable use of a rolling boil, a form of pressure cooking where the food is kept on the verge of boiling - considered to be useful in preserving food nutrients. Blown air cooking may also be facilitated, whereby air is blown outside or inside the bowl, allowing for healthier frying and roasting over 180-degrees.

An example cooking sequence is as follows:
Step 1. The hub is installed in a user kitchen. When first activated it cycles through different communications protocols to discover mobile, devices, appliances, and attachments in the vicinity, connect to the internet, register the hub with an external server, and confirm the hub as an authentic hub by exchanging security information. A questionnaire is sent by the external server to the user mobile device which the user fills out, and the filled out questionnaire is then returned to external server where data from the questionnaire and social media profiles that the external server is given access to is used to populate user profile stored on the external server.
Step 2. A user surfing the internet on a mobile device finds a web-page containing a plain-text recipe that they wish to cook using the hub, and instructs an app on the mobile device to transmit the URL of the plain-text recipe to an external server where the plain-text recipe is parsed into a machine-readable recipe containing data on ingredients, required attachments, required appliances, and nutritional content of the end-product of the recipe. The parsed recipe is then transmitted to the hub.
Step 3. Either the hub or the external server may at this stage analyse whether the parsed recipe conflicts with a user preference or characteristic stored on a user profile stored on either the hub or the server (for example, contains ingredients that they are allergic to according to their profile) and advise the user of this, and prompt them to select substitute ingredients (if available), via the app or the hub user interface. The requirement for ingredients, attachments, and appliances not known to be in the vicinity of the hub by either the hub or the server (based on presence information periodically transmitted by the hub to the server) will also be identified, and the user may be prompted to buy these on line.
Step 4. The user is instructed in plain text to perform the parsed recipe by attaching the required attachment and inserting the required ingredients. Where a cooking-step included in the parsed recipe requires use of another appliance, the hub may transmit instructions to that appliance instructing it to prepare for that cooking-step. For example, where a cooking-step requires that a mixture be taken from the attachment of the hub and placed in a pre-heated oven, the oven will be instructed to pre-heat to the desired temperature by the hub preparatory to that step.
Step 5. At each cooking-step, the hub will amend the parsed recipe "on the fly" so as to achieve a specific nutritional content or meet a user preference/characteristic if it detects via sensor means in the attachment (or sensor means located elsewhere, such as in an appliance or in the mobile device) that the food characteristics at that stage vary with those required to meet the desired end-goal.
Step 6. At each step requiring heating/cooling of the food or components of the tool within the attachment, an air flow control module within either the hub or the attachment will be controlled either by the hub control circuit or the attachment control circuit to direct hot or cold air to the relevant food receptacle or tool component using flaps and valves. Hot or cold air will be generated either within the hub or within the attachment using compressed air supplied within the hub. Similarly, where cooking steps require food processing by food processing tools powered by compressed-air powered motors, the air flow control modules will direct compressed air to the relevant compressed-air-power motor to begin food processing.
Step 7. The desired food characteristics for each step are transmitted by the hub control circuit to the attachment control circuit which drives the tools in the attachment to process the food to achieve the desired food characteristics based on feedback from sensor means within the attachment.
Step 8. When the recipe is complete, the hub automatically outputs via the internet a message saying "I cooked this!" to a user social media profile containing a picture of the completed food item captured by a camera, as well as the final amended recipe in plain-text format so that their friends may try to perform the same recipe.
Step 9. The hub then drives the air cooler module and the air flow control module to refrigerate food contained in a food receptacle of the attachment until it is removed for consumption.
Step 10. Once sensing means inside the attachment detect that the food has been removed, the hub may automatically clean the attachment with water and then dry and heat-treat it using hot, dry air. Alternatively this cleaning cycle may be ordered by user input either via the hub user interface or via a mobile device app.

### - new attachment

Step 1. The user attaches a new attachment to the hub. The hub control circuit executes a pressure-test of the connection between the hub and the attachment to ensure it is air-tight.
Step 2. The control circuit of the hub detects the new attachment, establishes communications with it by cycling through different communications protocols, and downloads information identifying the attachment once communications are established as well as other data stored on the attachment (eg. attachment driver software, and attachment UI data such as Ul symbols identifying the attachment).
Step 3. The hub control circuit compares the identifying information from the attachment with a list of known attachments stored in the memory of the hub control circuit, and identifies the attachment as new if it is not on the list.
Step 4. The hub updates a user profile stored on an external server to include the new attachment, and checks whether updates to the attachment-related software it has stored in its memory are available by, eg. comparing version data.
Step 5. Where the hub control circuit does not already have up-to-date attachment driver software, and attachment UI data (eg. UI symbols identifying the attachment) for the new attachment stored in its memory, it will download these from the external server.

### Modifications and alternatives

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in any claims are by way of illustration only and shall have no limiting effect on the scope of the claims.

The invention is also defined in the following clauses:

### - use of compressed air

1. A food processing hub comprising:
   An attachment connector for connecting to a food processing attachment; wherein the hub is adapted to supply a fluid to the attachment via the attachment connector.
2. A food processing hub according to clause 1, wherein the fluid is a gas.
3. A food processing hub according to clause 1 or 2, wherein the fluid is non-flammable.
4. A food processing hub according to any preceding clause, wherein the hub is adapted to supply the fluid for at least one of:
   i) food heating or cooling;
   ii) driving the food processing attachment; or
   iii) injection into or aeration of food.
5. A food processing hub according to any preceding clause, further comprising a fluid input, for receiving the fluid for supply via the attachment connector from a source external to the hub.
6. A food processing hub according to any preceding clause, further comprising a reservoir, for storing the fluid for supply via the attachment connector.
7. A food processing hub according to any preceding clause, further comprising a compressor, for compressing the fluid for supply via the attachment connector.
8. A food processing hub according to clause 6 or 7, wherein the hub is adapted to fill the reservoir in dependence on a determined filing state of the reservoir.
9. A food processing hub according to clause 8, further comprising a sensor adapted to determine the filing state of the reservoir.
10. A food processing hub according to any preceding clause, further comprising a heater for heating the fluid for supply via the attachment connector, preferably for the processing of the food by application of an impinging jet of hot gas for browning or crisping.
11. A food processing hub according to clause 10, wherein the heater comprises: a resistive heating, a Peltier heater, a gas-powered heater, a chemical reaction heater, a radiative heater, a compression heater or a hot air gun.
12. A food processing hub according to any preceding clause, further comprising a cooler for cooling the fluid for supply via the attachment connector.
13. A food processing hub according to clause 12, wherein the cooler comprises: a refrigerator, a compressor circuit, a Vortex cooler, a Peltier cooler, a gas-powered cooler, an evaporation cooler, a chemical reaction cooler or an expansion cooler.
14. A food processing hub according to any of clauses 10 to 13, wherein operation of the heater or cooler is in dependence on data received from a sensor.
15. A food processing hub according to any preceding clause, further comprising a flow controller for controlling the flow of fluid via the attachment connector.
16. A food processing hub according to any preceding clause, further comprising a gas supply connector for supplying a gas via an additional route via the attachment connector.
17. A food processing hub according to any preceding clause, wherein the hub is adapted to supply water via the attachment connector, preferably for the processing of the food by heating, maintaining moisture or cooling.
18. A food processing hub according to clause 17, further comprising a water input, for receiving the water for supply via the attachment connector from a source external to the hub.
19. A food processing hub according to clause 17 or 18, further comprising a water reservoir, for storing the water for supply via the attachment connector.
20. A food processing hub according to any of clauses 17 to 19, wherein the hub is adapted to supply a mixture of air and water via the attachment connector.
21. A food processing hub according to any preceding clause, wherein the hub is adapted to supply power via the attachment connector.
22. A food processing hub according to any preceding clause, wherein the hub is adapted to receive and/or transmit data via the attachment connector.
23. A food processing hub according to any preceding clause, wherein the hub is adapted to supply combustible fuel via the attachment connector.
24. A food processing hub according to any preceding clause, wherein the hub is adapted to receive waste via the attachment connector.
25. A food processing hub according to any preceding clause, further comprising hub control circuitry, comprising a processor and memory, for controlling operation of the hub.
26. A food processing hub according to clause 25, further comprising a user interface for enabling interaction of a user of the hub with the hub control circuitry.
27. A food processing hub according to any preceding clause, further comprising a filter to prevent ingress of particles into the hub via the attachment connector.
28. A food processing hub according to any preceding clause, wherein the fluid is air or an inert gas, for example nitrogen.
29. A food processing hub according to any preceding clause, further comprising a recycling control unit, adapted to recycle and/or vent via an exhaust the fluid and/or water after use.

### - recycling & filtering

30. A food processing hub, adapted to supply a fluid to an attachment for the processing of food, comprising: a recycling control element, adapted to recycle and/or vent the fluid after use.
31. A food processing hub according to clause 29 or 30, wherein the recycling control element comprises a flap or valve adapted to direct the fluid for recycling and/or venting.
32. A food processing hub according to clause 30 or 31, wherein the recycling control unit is adapted to recycle or vent in dependence on a user input.
33. A food processing hub according to any of clauses 30 to 32, wherein the recycling control unit is adapted to recycle or vent in dependence on a recipe or a program.
34. A food processing hub according to any of clauses 30 to 33, further comprising a heat exchanger through which fluid being recycled or vented is passed.
35. A food processing hub according to any preceding clause, further comprising a heater element.

### - modularity/ positionable heating plates

36. A food processing hub, adapted to supply a fluid to an attachment for the processing of food, comprising a heater element for supplying heat to the attachment (preferably to the fluid in the attachment).
37. A food processing hub according to clause 35 or 36, wherein the heater element is an induction heater.
38. A food processing hub according to clause 36 or 37, wherein the heater element is removable.
39. A food processing hub according to any preceding clause, further comprising control circuitry to control operation of the hub in response to a signal from a sensor, preferably a sensor external to the hub.

### - food sensors

40. A food processing hub, adapted to supply a fluid to an attachment for the processing of food, comprising control circuitry to control operation of the hub in response to a signal from a sensor, preferably a sensor external to the hub.
41. A food processing hub according to clause 39 or 40, wherein the sensor is one or more of:
   i) an analytical sensor, such as a gas chromatograph or spectrometer;
   ii) an environmental sensor, such as a temperature or humidity sensor;
   iii) an optical sensor;
   iv) capable of determining one or more characteristic such as weight, density, particulate size, orientation, temperature.
42. A food processing hub according to clause 40 or 41, wherein the signal from the sensor is received wirelessly.
43. A food processing hub according to any of clauses 40 to 42, wherein the sensor is in contact with or inserted into food.
44. A food processing hub according to any preceding clause, further comprising a transceiver adapted to communicate with a device external to the hub.

### - network integration

45. A food processing hub comprising a plurality of connectors (such connectors preferably being different or of a different type) for connecting attachments for processing food, the hub being adapted to control operation of the attachments via the connectors, and comprising a transceiver adapted to communicate with a device external to the hub.
46. A food processing hub according to clause 44 or 45, wherein the external device is at least one of:
   i) a smart meter;
   ii) a domestic appliance;
   iii) a portable electronic device such as a smartphone or tablet;
   iv) a router;
   v) a remote server;
   vi) a robot.
47. A food processing hub according to clause 45 or 46, wherein the hub is adapted to communicate wirelessly.
48. A food processing hub according to any of clauses 45 to 47, wherein the hub is adapted to communicate using multiple protocols.
49. A food processing hub according to clause 48, wherein the hub is adapted to switch between different communication protocols in dependence on at least one of:
   i) its current activity;
   ii) in order to reduce interference;
   iii) in order to find a protocol compatible with that of the external device;
   iv) according to the importance of the data to be communicated.
50. A food processing hub according to any of clauses 45 to 49, wherein the hub is adapted to queue data for communication in dependence on at least one of:
   i) a disruption in communication with the external device;
   ii) in accordance with the importance of the data to be communicated;
   iii) on request from the external device.
51. A food processing hub according to any of clauses 45 to 50, wherein the hub is adapted to register with a remote server and to store and/or retrieve a user profile from the remote server.
52. A food processing hub according to clause 51, wherein the user profile comprises at least one of:
   i) a user identity;
   ii) user food and/or recipe preferences;
   iii) user allergies;
   iv) user social media details;
   v) detail of a domestic appliance in communication with the hub;
   vi) details of an attachment available to the hub.
53. A food processing hub according to any of clauses 45 to 52, the hub adapted to detect the presence of an attachment connected to the attachment connector.
54. A food processing hub according to clause 53, further comprising an attachment identification module adapted to determine the identity of the attachment connected to the hub.
55. A food processing hub according to clause 54, adapted to store an identifier for the hub and/or attachment in a database.
56. A food processing hub according to clause 54 or 55, wherein the hub is adapted to download data from a remote server in dependence on the determined identity of the attachment, the data comprising at least one of:
   i) attachment data;
   ii) software or firmware for operating the attachment;
   iii) a recipe making use of the attachment.
57. A food processing hub according to any of clauses 45 to 56, wherein the hub is adapted to be controlled remotely from the external device.
58. A food processing hub according to any of clauses 45 to 57, wherein the hub is adapted to transmit and/or receive information relating to usage and/or availability of household utilities, for example water or power.
59. A food processing hub according to clause 58, wherein the hub is adapted to deactivate a connected attachment if a utility required by the attachment is unavailable.
60. A food processing hub according to any of clauses 45 to 59, wherein the hub is adapted to communicate with social media, preferably to at least one of:
   i) upload a picture of a food product;
   ii) upload a user recipe amendment;
   iii) upload an amended recipe.
61. A food processing hub according to any of clauses 30 to 60, wherein the fluid comprises compressed gas and/or water.

### - attachment

62. A food processing attachment, adapted to receive a supply of fluid, preferably a non-flammable and/or compressed fluid, and optionally gas or water, via an attachment connector from a food processing hub.
63. A food processing attachment according to clause 62, wherein the attachment is adapted to use the supplied fluid for at least one of:
   i) food heating or cooling;
   ii) driving a food processing part of the attachment; or
   iii) injection into or aeration of food.
64. A food processing attachment according to clause 62 or 63, further comprising a heater for heating the fluid supplied via the attachment connector.
65. A food processing attachment according to clause 64, wherein the heater comprises: a resistive heating, a Peltier heater, a gas-powered heater, a chemical reaction heater, a radiative heater, a compression heater or a hot air gun.
66. A food processing attachment according to any of clauses 62 to 65, further comprising a cooler for cooling the fluid for supply via the attachment connector.
67. A food processing attachment according to clause 66, wherein the gas cooler comprises: a refrigerator, a compressor circuit, a Vortex cooler, a Peltier cooler, a gas-powered cooler, an evaporation cooler, a chemical reaction cooler or an expansion cooler.
68. A food processing attachment according to any of clauses 62 to 67, wherein operation of the heater or cooler is in dependence on data received from a sensor.
69. A food processing attachment according to any of clauses 62 to 68, further comprising a fluid flow controller for controlling the flow of fluid via the attachment connector.
70. A food processing attachment according to any of clauses 62 to 69, further comprising a fluid supply connector for receiving fluid via an additional route to via the attachment connector.
71. A food processing attachment according to any of clauses 62 to 70, wherein the attachment is adapted to receive power via the attachment connector.
72. A food processing attachment according to any of clauses 62 to 71, wherein the attachment is adapted to receive and/or transmit data via the attachment connector.
73. A food processing attachment according to any of clauses 62 to 72, wherein the hub is adapted to supply combustible fuel via the attachment connector.
74. A food processing attachment according to any of clauses 62 to 73, wherein the attachment is adapted to pass waste via the attachment connector.
75. A food processing attachment according to any of clauses 62 to 74, further comprising attachment control circuitry, comprising a processor and memory, for controlling operation of the attachment.
76. A food processing attachment according to any of clauses 62 to 75, further comprising a recycling control element, adapted to recycle and/or vent via an exhaust the fluid and/or water after use.
77. A food processing attachment according to clause 76, wherein the recycling control element comprises a flap or valve adapted to direct the fluid and/or water for recycling and/or venting.
78. A food processing attachment according to clause 75 or 77, wherein the recycling control unit is adapted to recycle or vent in dependence on user input.
79. A food processing attachment according to any of clauses 75 to 78, wherein the recycling control unit is adapted to recycle or vent in dependence on a recipe or program.
80. A food processing attachment according to any of clauses 75 to 79, further comprising a heat exchanger through which air / water being recycled or vented is passed.
81. A food processor attachment according to any of clauses 62 to 80, further comprising a filter to prevent ingress of particles into the attachment from the hub via the attachment connector.
82. A food processor attachment according to any of clauses 62 to 81, wherein the attachment comprises either:
   i) a jacket adapted to fit over another attachment; or
   ii) an insert adapted to fit into another attachment.
83. A food processor attachment according to any of clauses 62 to 82, wherein the attachment comprises a hollow-walled bowl.
84. A food processor attachment according to any of clauses 62 to 83, wherein the attachment comprises a whisk/beater, preferably wherein the fluid, optionally a gas, is arranged to be output from whisk/beater.
85. A food processor attachment according to any of clauses 62 to 84, comprising anti-microbial material.
86. A food processor attachment according to any of clauses 62 to 85, further comprising a UV sterilisation unit.
87. A food processing attachment, preferably according to any of clauses 62 to 86, adapted to connect to the food processor hub of any of clauses 1 to 60.

### - use of compressed air method

88. A method of operating a food processing hub, comprising supplying a fluid from the hub via an attachment connector to a food processing attachment.
89. A method according to clause 88, wherein the fluid is non-flammable.
90. A method according to clause 88 or 89, wherein the fluid is a compressed gas.
91. A method according to any of clauses 88 to 90, comprising at least one of:
   i) heating or cooling the food;
   ii) driving the food processing attachment; or
   iii) injection into or aeration of the food.
92. A method according to any of clauses 88 to 91, further comprising receiving via a fluid input the fluid for supply via the attachment connector from a source external to the hub.
93. A method according to any of clauses 88 to 92, further comprising storing in a reservoir the fluid for supply via the attachment connector.
94. A method according to any of clauses 88 to 93, further comprising compressing with a compressor the fluid for supply via the attachment connector.
95. A method according to clause 93 or 94, further comprising filling the reservoir in dependence on a determined filing state of the reservoir.
96. A method according to clause 95, further comprising determining the filing state of the reservoir by means of a sensor.
97. A method according to any of clauses 88 to 96, further comprising heating the fluid for supply via the attachment connector, preferably for the processing of the food by application of an impinging jet of hot gas for browning or crisping.
98. A method according to clause 97, wherein the heater comprises: a resistive heating, a Peltier heater, a gas-powered heater, a chemical reaction heater, a radiative heater, a compression heater or a hot air gun.
99. A method according to any of clauses 88 to 98, further comprising cooling the fluid for supply via the attachment connector.
100. A method according to clause 99, wherein the cooler comprises: a refrigerator, a compressor circuit, a Vortex cooler, a Peltier cooler, a gas-powered cooler, an evaporation cooler, a chemical reaction cooler or an expansion cooler.
101. A method according to any of clauses 97 to 100, comprising heating or cooling the fluid in dependence on data received from a sensor.
102. A method according to any of clauses 88 to 101, further comprising controlling the flow of fluid via the attachment connector.
103. A method according to any of clauses 88 to 102, further comprising supplying the fluid via an additional route to via the attachment connector.
104. A method according to any of clauses 88 to 103, further comprising supplying water via the attachment connector, preferably for the processing at the food by heating, maintaining moisture or cooling.
105. A method according to clause 104, further comprising receiving via a water input the water for supply via the attachment connector from a source external to the hub.
106. A method according to clause 105, further comprising storing in a water reservoir the water for supply via the attachment connector.
107. A method according to any of clauses 88 to 106, further comprising supplying a mixture of air and water via the attachment connector.
108. A method according to any of clauses 88 to 107, further comprising supplying power via the attachment connector.
109. A method according to any of clauses 88 to 108, further comprising receiving and/or transmitting data via the attachment connector.
110. A method according to any of clauses 88 to 109, further comprising receiving waste via the attachment connector.
111. A method according to any of clauses 88 to 110, further comprising controlling operation of the hub via hub control circuitry, comprising a processor and memory.
112. A method according to clause 111, further comprising enabling interaction of a user of the hub with the hub control circuitry via a user interface.
113. A method according to any of clauses 88 to 112, further comprising filtering the fluid and/or water supplied via the attachment connector to prevent ingress of particles into the hub and/or attachment.
114. A method according to any of clauses 86 to 113, wherein the fluid is air or an inert gas, for example nitrogen.
115. A method according to any of clauses 86 to 114, further comprising recycling and/or venting via an exhaust the fluid and/or water after use.

### - recycling & filtering method

116. A method of operating a food processing hub, adapted to supply a fluid, preferably a non-flammable and/or compressed fluid, and optionally gas or water, to an attachment for the processing of food, comprising recycling and/or venting via an exhaust the fluid, gas and/or water after use.
117. A method according to clause 115 or 116, further comprising directing the fluid, gas and/or water for recycling and/or venting via a flap or valve.
118. A method according to clause 116 or 117, wherein recycling or venting is in dependence on user input.
119. A method according to any of clauses 116 to 118, wherein recycling or venting is in dependence on a recipe or program.
120. A method according to any of clauses 116 to 119, further comprising passing the fluid being recycled or vented through a heat exchanger.
121. A method according to any of clauses 116 to 120, further comprising heating the fluid.

### - modularity/ positionable heating plates method

122. A method of operating a food processing hub, adapted to supply a fluid, preferably a non-flammable and/or compressed fluid, and optionally gas or water, to an attachment for the processing of food, comprising heating the food with a heating element.
123. A method according to clause 121 or 121, wherein the heating is via an induction heater.
124. A method according to clause 122 or 123, further comprising removing the heater element from the hub.
125. A method according to any of clauses 122 to 124, further comprising controlling operation of the hub via control circuitry in response to a signal from a sensor, preferably a sensor external to the hub.

### - food sensors method

126. A method of operating a food processing hub, comprising supplying a fluid, preferably a non-flammable and/or compressed fluid, and optionally gas or water, to an attachment for the processing of food, and further comprising controlling operation of the hub via control circuitry in response to a signal from a sensor, preferably a sensor external to the hub.
127. A method according to clause 125 or 126, wherein the sensor is one or more of:
   i) an analytical sensor, such as a gas chromatograph or spectrometer;
   ii) an environmental sensor, such as a temperature or humidity sensor;
   iii) an optical sensor;
   iv) capable of determining one or more characteristic such as weight, density, particulate size, orientation, temperature.
128. A method according to clauses 126 or 127, further comprising receiving the signal from the sensor wirelessly.
129. A method according to any of clauses 126 to 128, further comprising placing the sensor in contact with or inserted into food.
130. A method according to any of clauses 126 to 129, further comprising communicating with a transceiver with a device external to the hub.

### - network integration method

131. A method of operating a food processing hub, comprising supplying a fluid, preferably a non-flammable and/or compressed fluid, and optionally gas or water, to an attachment for the processing of food, and further comprising communicating with a transceiver with a device external to the hub.
132. A method according to clause 130 or 141, wherein the external device is at least one of:
   i) a smart meter;
   ii) a domestic appliance;
   iii) a portable electronic device such as a smartphone or tablet;
   iv) a router;
   v) a remote server;
   vi) a robot.
133. A method according to clause 141 or 142, further comprising communicating with external device wirelessly.
134. A method according to any of clauses 131 to 133, further comprising communicating using multiple protocols.
135. A method according to clause 134, further comprising switching between different communication protocols in dependence on at least one of:
   i) its current activity;
   ii) in order to reduce interference;
   iii) in order to find a protocol compatible with that of the external device;
   iv) according to the importance of the data to be communicated.
136. A method according to any of clauses 131 to 135, further comprising queuing data for communication in dependence on at least one of:
   i) a disruption in communication with the external device;
   ii) in accordance with the importance of the data to be communicated;
   iii) on request from the external device.
137. A method according to any of clauses 131 to 136, further comprising registering the hub with a remote server.
138. A method according to clause 137, further comprising storing and/or retrieving a user profile from the remote server.
139. A method according to clause 138, wherein the user profile comprises at least one of:
   i) a user identity;
   ii) user food and/or recipe preferences;
   iii) user allergies;
   iv) user social media details;
   v) detail of a domestic appliance in communication with the hub;
   vi) details of an attachment available to the hub.
140. A method according to any of clauses 131 to 139, further comprising detecting the presence of an attachment connected to the attachment connector.
141. A method according to clause 140, further comprising determining the identity of the attachment connected to the hub.
142. A method according to clause 141, further comprising storing an identifier for the hub and/or attachment in a database.
143. A method according to clause 141 or 142, further comprising downloading data from a remote server in dependence on the determined identity of the attachment, the data comprising at least one of:
   i) attachment data;
   ii) software or firmware for operating the attachment;
   iii) a recipe making use of the attachment.
144. A method according to any of clauses 131 to 143, further comprising controlling the hub remotely from the external device.
145. A method according to any of clauses 131 to 144, further comprising transmitting and/or receiving information relating to usage and/or availability of household utilities, for example water or power.
146. A method according to clause 145, further comprising deactivating a connected attachment if a utility required by the attachment is unavailable.
147. A method according to any of clauses 131 to 145, further comprising communicating with social media, preferably at least one of:
   i) uploading a picture of a food product;
   ii) uploading a user recipe amendment;
   iii) upload an amended recipe.
148. A method according to any of clauses 88 to 147, further comprising maintaining a sterile environment by periodic heating or refrigeration of the hub and/or attachment.
149. A method according to any of clauses 88 to 148, further comprising periodically activating a UV sterilisation unit associated with the hub and/or attachment.
150. A kitchen appliance for preparing food, comprising:
   a gas input, a gas output, and means for controlling gas input and output in the kitchen appliance;
   a liquid input; a liquid output; and means for controlling liquid input and output (for example, a valve and/or a fluid controller) in the kitchen appliance; and
   an electrical input; and means for controlling electrical input (for example, a switch and/or an electrical controller) in the kitchen appliance.

### - Cloud sever

151. An external of cloud-based server adapted to interact with the food processing hub according to any of clauses 1 to 60.

### - Product-by-process

152. Food processed by a food processing hub according to any of clauses 1 to 61 in combination with an attachment according to any of clauses 62 to 87.

### - Kitchen Appliance

153. A kitchen appliance for processing food, comprising:
   a heater for heating food; and
   a cooler for cooling food.
154. A kitchen appliance according to clause 153, wherein the cooler is a refrigeration system, preferably comprising a condenser, evaporator and a compressor, more preferably a rotary compressor.
155. A kitchen appliance according to clause 153 or 154, wherein the cooler also comprises a fan arranged to draw fluid from outside the kitchen appliance and onto the refrigeration system so as to cool the refrigeration system.
156. A kitchen appliance according to any of clauses 153 to 155, wherein the cooler is arranged so as to cool the heater, preferably the fan is arranged to cool the heater.
157. A kitchen appliance according to any of clauses 153 to 156, wherein the kitchen appliance comprises a motor for driving an attachment, preferably the attachment being a rotatable toot.
158. A kitchen appliance according to any of clauses 153 to 157, wherein the kitchen appliance is arranged to engage with an attachment for processing food, and wherein the cooler comprises a conduit for cooling the attachment, preferably the attachment being a container for food.
159. A kitchen appliance according to clause 158, wherein the conduit comprises an inlet port for supplying a cooled fluid to the attachment and/or an outlet port for receiving warmed fluid from the attachment.
160. A kitchen appliance according to clause 158 or 159, wherein the inlet and/or outlet port comprise engagement means for engaging with the attachment, and preferably so as to form a fluid-tight engagement.
161. A kitchen appliance according to any of clauses 153 to 160, wherein the cooler comprises a heat exchanger formed from a crystalline polymer or a semi-crystalline polymer.
162. A kitchen appliance according to any of clauses 153 to 161, wherein the heater is an induction or resistive heater.
163. A kitchen appliance according to any of clauses 153 to 162, comprising a stand mixer.
164. A kitchen appliance for processing food, comprising:
   a container for holding food to be processed by the kitchen appliance; and
   a cooling system for cooling food in the container, wherein the container and the cooling system are in fluid connection.
165. A kitchen appliance according to clause 164, wherein the cooling system in contained in a body of the appliance, preferably in a base thereof.
166. A kitchen appliance according to clause 164 or 165, wherein the container is detachable from a body of the appliance.
167. A kitchen applicant according to clause 165 or 166, wherein the container and the body each comprise a fluid conduit together forming a cooling fluid circuit for circulating a cooling fluid between the container and the appliance body.
168. A kitchen appliance according to clause 167, comprising a closed refrigeration circuit for circulating a refrigerant provided in the body of the appliance, in which the cooling fluid circuit is in thermal contact with the refrigeration circuit.
169. A kitchen appliance according to clause 167 or 168, in which the cooling fluid is air.
170. A kitchen appliance according to clause 167, 168 or 169, in which the cooling circuit is opened when the container is removed from the body.
171. A kitchen appliance according to any of clauses 164 to 170, wherein the container comprises an engagement arrangement or formation for engaging to the base of the kitchen appliance.
172. A kitchen appliance according to clause 171, wherein the container comprises an engagement arrangement for coupling the fluid conduits in the container and the body.
173. A kitchen appliance according to any of clauses 164 to 172, in which the container comprises a double walled chamber configured to direct fluid between the walls in a substantially helical path.
174. A kitchen appliance according to clause 173, in which the inner wall of the container is detachable.
175. A kitchen appliance according to any of clauses 164 to 174, comprising a rotary tool for processing food in the container.
176. A kitchen appliance according to clause 175 in which the rotary tool is motor driven.
177. A kitchen appliance according to any of clauses 153 to 176 wherein the body of the appliance comprises a hub according to clause 1.
178. A container for an appliance according to any of clauses 164 to 177.
179. A container for an appliance according to clause 176, in which the container is an attachment according to clause 62.

### - Omnibus

180. A food processing system comprising a food processing hub according to any of clauses 1 to 61 in combination with an attachment according to any of clauses 62 to 87.
181. A food processing hub substantially as herein described with reference to the accompanying drawings.
182. A food processing attachment for a food processing hub substantially as herein described with reference to the accompanying drawings.
183. A food processing system comprising a food processing hub and an attachment substantially as herein described with reference to the accompanying drawings.
184. Apparatus substantially as herein described with reference to the accompanying drawings.
185. A method substantially as herein described with reference to the accompanying drawings.
186. A kitchen appliance substantially as herein described with reference to the accompanying drawings.

## Claims

1. A food processor comprising:
at least one connector for connecting an attachment for processing food, the processor being adapted to control operation of the attachment;
a user interface for receiving recipe information from the user, the processor being adapted to identify requirements for ingredients from the recipe information; and
a transceiver adapted to communicate with a device external to the processor to prompt the user to purchase the ingredients.

2. A food processor according to claim 1, wherein the external device is at least one of:
i) a smart meter;
ii) a domestic appliance;
iii) a portable electronic device such as a smartphone or tablet;
iv) a router;
v) a remote server;
vi) a robot.

3. A food processor according to claim 1 or 2, wherein the processor is adapted to communicate wirelessly.

4. A food processor according to any of claims 1 to 3, wherein the processor is adapted to communicate using multiple protocols, optionally wherein the processor is adapted to switch between different communication protocols in dependence on at least one of:
i) its current activity;
ii) in order to reduce interference;
iii) in order to find a protocol compatible with that of the external device;
iv) according to the importance of the data to be communicated.

5. A food processor according to any preceding claim, wherein the processor is adapted to queue data for communication in dependence on at least one of:
i) a disruption in communication with the external device;
ii) in accordance with the importance of the data to be communicated;
iii) on request from the external device.

6. A food processor according to any preceding claim, wherein the processor is adapted to register with a remote server and to store and/or retrieve a user profile from the remote server, optionally wherein the user profile comprises at least one of:
i) a user identity;
ii) user food and/or recipe preferences;
iii) user allergies;
iv) user social media details;
v) detail of a domestic appliance in communication with the hub;
vi) details of an attachment available to the hub.

7. A food processor according to any preceding claim, adapted to detect the presence of an attachment connected to the attachment connector.

8. A food processor according to claim 7, further comprising an attachment identification module adapted to determine the identity of the attachment connected to the processor, preferably adapted to store an identifier for the processor and/or attachment in a database.

9. A food processor according to claim 8, wherein the processor is adapted to download data from a remote server in dependence on the determined identity of the attachment, the data comprising at least one of:
i) attachment data;
ii) software or firmware for operating the attachment;
iii) a recipe making use of the attachment.

10. A food processor according to any preceding claim, wherein the processor is adapted to be controlled remotely from the external device.

11. A food processor according to any preceding claim, wherein the processor is adapted to transmit and/or receive information relating to usage and/or availability of household utilities, for example water or power, and optionally wherein the processor is adapted to deactivate a connected attachment if a utility required by the attachment is unavailable.

12. A food processor according to any preceding claim, wherein the processor is adapted to communicate with social media, preferably to at least one of:
i) upload a picture of a food product;
ii) upload a user recipe amendment;
iii) upload an amended recipe.

13. A food processor according to any preceding claim, in which the attachment comprises a detachable bowl having a motor driven tool.

14. A food processor according to any preceding claim, in which the user interface receives the recipe information from the user via an external device, optionally in which the recipe information is parsed into a machine-readable recipe.

15. A food processor according to any preceding claim, in which the processor is adapted to instruct the user to perform the recipe.
